# EUROPÄISCHE PATENTSCHRIFT

(11) **EP 3 440 722 B1**
(45) Veröffentlichungstag und Bekanntmachung des Hinweises auf die Patenterteilung: **04.03.2020**
(21) Anmeldenummer: 16790896.1
(22) Anmeldetag: 12.10.2016
(51) Int. Cl.: B60L 50/64, H01M 2/10, B62K 19/36, B62J 1/00, B62K 19/46, H01M 10/625, H01M 10/6563, H01M 10/613, B62J 1/28, B60L 3/00, B62K 19/30, H01M 10/42, H01M 10/6556, H01M 10/6561, B60L 53/16, B60L 58/26, B60L 53/80, B60L 50/60

(54) **SCHNELL AUSTAUSCHBARE SITZBAUGRUPPE BZW. BATTERIEBAUGRUPPE UND MOTORFAHRZEUG, INSBESONDERE MOTORROLLER**
RAPIDLY EXCHANGEABLE SEAT MODULE AND BATTERY MODULE, AND MOTOR VEHICLE, IN PARTICULAR A SCOOTER
MODULE DE SIÈGE ET MODULE DE BATTERIE RAPIDEMENT ÉCHANGEABLE ET VÉHICULE MOTORISÉ, EN PARTICULIER UN SCOOTER

(30) Priorität: 06.04.2016 WO PCT/EP2016/057500
(43) Veröffentlichungstag der Anmeldung: 13.02.2019
(73) Patentinhaber: UJET S.A., 3364 Leudelange (LU)
(72) Erfinder: KOROPACHINSKY, Yuri, Point Piper, NSW 2027 (AU); DAVID, Patrick, 89134 Blaustein (DE)
(74) Vertreter: Würmser, Julian
(86) Internationale Anmeldenummer: PCT/EP2016/074480
(87) Internationale Veröffentlichungsnummer: WO 2017/174163

(56) Entgegenhaltungen:
- EP-A2- 2 280 436
- DE-A1-102007 054 258
- DE-A1-102011 111 537
- FR-A- 1 248 870
- JP-A- H08 273 648
- JP-A- 2000 351 391
- US-A1- 2006 180 373

## Beschreibung

Die Erfindung betrifft eine Sitzbaugruppe nach Patentanspruch 1 und eine Batteriebaugruppe, insbesondere für ein elektrisch angetriebenes Motorfahrzeug, insbesondere Motorrad, vorzugsweise Motorroller, gemäß Patentanspruch 6. Des Weiteren betrifft die Erfindung ein elektrisch angetriebenes Motorfahrzeug, insbesondere Motorrad, vorzugsweise Motorroller, umfassend mindestens eine Batteriebaugruppe und/oder Sitzbaugruppe, gemäß Patentanspruch 16. Außerdem betrifft die Erfindung ein Verfahren zur Konfektionierung eines Motorfahrzeugs gemäß Patentanspruch 20.

Mit elektrischen Antrieben ausgestattete Motorräder bzw. Motorroller sind bekannt. Rein exemplarisch wird auf die EP 1 857 314 A2 verwiesen. Entsprechende elektrisch angetriebene Motorräder bzw. Motorroller haben üblicherweise eine Karosserie und mindestens zwei Räder, wobei eines der Räder über einen elektrischen Antrieb angetrieben wird, der über eine Batterie gespeist wird. Für das Laden einer Batterie wird wesentlich mehr Zeit benötigt als für das Volltanken von mit einer Brennkraftmaschine betriebenen Motorfahrzeugen. Insofern soll das Laden einer wiederaufladbaren Batterie möglichst dann erfolgen, wenn das elektrische Motorfahrzeug auf absehbare Zeit nicht benötigt wird. Das Motorfahrzeug/der Motorroller kann in dieser Ladezeit der Batterie nicht genutzt werden.

Auch ist es bei Motorrädern bzw. Motorrollern notwendig, dass die Sitzhöhe an die Größe des Fahrers angepasst ist, sodass ein sicheres Verwenden des Motorollers gewährleistet ist. Üblicherweise werden Motorroller mit einem Sattel an den Endkunden ausgeliefert, dessen Höhe nicht mehr veränderbar ist. Bei einem Fahrerwechsel ist es jedoch notwendig, dass der Sattel auch nach Auslieferung noch gewechselt werden kann, um die Polsterhöhe an den Fahrer anpassen zu können.

Die JP H08 273648 A beschreibt ein als Sitzbaugruppe ausgebildete Batteriegehäuse, welches über einen Hebelmechanismus entriegelt und abgenommen werden kann.

Die FR 1 248 870 A beschreibt eine sattelartige Sitzbaugruppe mit einem Fach und einer darin integrierten Schublade, die mittels eines Sicherungselementes mit dem Fach lösbar fixiert ist.

Die US 2006/180373 A1 beschreibt eine austauschbare Sitzgruppe für ein Motorrad, wobei die Sitzgruppe mit dem Rahmen über ein Sicherungselement lösbar verbunden ist, wobei das Sicherungselement über ein Kabel durch einen Schließmechanismus betätigt wird.

Die DE 10 2011 111537 A1 beschreibt einen Elektroroller mit Batteriebaugruppe, die an verschiedenen Stellen des Rollers integriert sein kann. Die Batteriebaugruppe weist eine aufladbare Batterie, einen in dem Gehäuse integrierten, teleskopartig ausziehbaren oder schwenkbaren Griff auf, und wird mechanisch an bzw. in dem Motorroller verriegelt, wobei die Verriegelung bevorzugt durch Betätigen des Griffes aufgehoben werden kann.

Die DE 10 2007 054258 A1 beschreibt eine in ein Motorrad integrierbare Batteriebaugruppe beinhaltend mindestens eine wiederaufladbare Batterie in einem Batteriegehäuse, welches lösbar am Fahrzeug befestigt und mit Hilfe eines teleskopartigen oder ausklappbaren Griffes mittels Rollen bzw. Rädern transportierbar ist.

Die EP 2 280 436 A2 beschreibt eine in einen Motorroller integrierbare Batteriebaugruppe mit lösbarer mechanischer Verriegelung, die mittels eines Hebels über ein Kabel entriegelt werden kann

Die JP 2000 351391 A beschreibt einen Motorroller mit konfektionierbarer Sitzgruppe, die mittels Rastnasen an einem Rahmenteil fixiert ist.

Ausgehend von diesem Stand der Technik ist es Aufgabe der vorliegenden Erfindung, eine Sitzbaugruppe bereitzustellen, die die oben benannten Nachteile adressiert. Insbesondere soll eine Sitzbaugruppe angegeben werden, die einen sicheren Halt des Sattels während der Fahrt sicherstellt und an den Fahrer individuell angepasst werden kann. Ferner soll der Sattel vor dem Zugriff durch unberechtigte geschützt sein. Es soll darüber hinaus ein Verfahren zur Konfektionierung eines Motorfahrzeugs angegeben werden. Ferner ist es Aufgabe der Erfindung eine Batteriebaugruppe zur Verfügung zu stellen, die möglichst einfach und ohne großen Kraftaufwand aus einem Motorfahrzeug, z.B. einem Motorroller. ausgebaut werden kann, so dass das Motorfahrzeug/der Motorroller mit einer vollgeladenen Batterie bzw. einer vollgeladenen Batteriebaugruppe bestückt werden kann. Des Weiteren ist es Aufgabe der vorliegenden Erfindung, ein weiterentwickeltes Motorfahrzeug, vorzugsweise einen weiterentwickelten Motorroller, anzugeben, der derart ausgebildet ist, dass dieser einfach mit auswechselbaren Batteriebaugruppen zu bestücken ist.

Die Aufgabe wird gelöst durch eine Sitzbaugruppe für ein Motorfahrzeug gemäß Anspruch 1.

Insbesondere wird die Aufgabe gelöst durch eine Sitzbaugruppe, insbesondere Batteriebaugruppe, umfassend:
- einen Rahmen, insbesondere umfassend ein Batteriegehäuse;
- einen Sattel, der auf dem Rahmen angeordnet und mit dem Rahmen über ein Sicherungselement lösbar verbunden ist;
- ein Fach mit einer Schublade, die innerhalb des Fachs ausziehbar angeordnet ist,
wobei:
das Sicherungselement dazu ausgebildet ist:
   - den Sattel in einer Freigabeposition freizugeben; und
   - den Sattel in einer Verankerungsposition zu sichern,
wobei das Sicherungselement derart angeordnet und ausgebildet ist, das das Sicherungselement beim Ausziehen der Schublade betätigt und/oder freigegeben wird.

Der Sattel ist bei der bereitgestellten Sitzbaugruppe auf dem Rahmen angeordnet. Bei dem Rahmen kann es sich um eine beliebige Tragstruktur handeln. Es ist also denkbar, dass der Rahmen innerhalb eines Gehäuses angeordnet ist, dass der Rahmen das Gehäuse selbst darstellt, dass der Rahmen um ein Gehäuse herum angeordnet ist oder, dass der Rahmen in ein Gehäuse integriert ist oder das Gehäuse ein Teil des Rahmens ist.

Mit der bereitgestellten Sitzbaugruppe ist es also möglich, dass ein Sattel einfach gelöst werden kann, wenn das Sicherungselement betätigt wird. Dies kann einerseits durch das Ausziehen der Schublade aus dem Fach umgesetzt werden oder andererseits durch z.B. ein manuelles Betätigen des Sicherungselements. Auch ist es möglich, dass das Sicherungselement in der Verankerungsposition freigegeben bzw. zugänglich wird. In jedem Fall kann der Sattel einfach gelöst und somit ausgetauscht werden.

In einer Ausführungsform kann das Sicherungselement ein Stift und eine Nut oder eine Öse umfassen, wobei die Nut bzw. Öse fest mit dem Sattel und der Stift fest mit der Schublade verbunden sein kann, wobei der Stift in einer eingeschobenen Position der Schublade derart in die Nut bzw. Öse eingreifen kann, dass der Sattel gegen Diebstahl gesichert ist.

Eine besonders effiziente Umsetzung des Sicherungselements ist das Vorsehen eines Stifts, der in eine Nut eingreift, um den Sattel zu sichern. Dabei kann z.B. der Stift fest mit der Schublade verbunden werden, und die Nut kann an dem Sattel vorgesehen sein. Dabei kann der Stift in der Verankerungsposition so in die Nut eingreifen, dass der Sattel nicht gelöst werden kann. Beim Ausziehen der Schublade wird dann der Stift aus der Nut herausgezogen, sodass der Sattel einfach abgenommen werden kann.

In einer Ausführungsform kann das Sicherungselement als Schnappverschluss ausgebildet sein.

Es ist mit der genannten Ausführungsform auch möglich, dass der Sattel mit dem Rahmen über einen Schnappverschluss derart verbunden ist, dass der Sattel mit dem Rahmen in der Verankerungsposition verrastet.

Es wird also eine weitere Möglichkeit angegeben, wie der Sattel mit dem Rahmen gesichert werden kann. Das Vorsehen eines Schnappverschlusses hat den Vorteil, dass der Benutzer eine haptische Rückmeldung erhält, wenn der Sattel mit dem Rahmen verrastet wird.

In einer Ausführungsform kann die Sitzbaugruppe ein Federelement aufweisen, wobei das Federelement so angeordnet und ausgebildet sein kann, dass der Sattel gegenüber dem Rahmen mittels des Federelements vorgespannt ist, wenn der Sattel gesichert ist.

Das Vorspannen des Sattels gegenüber dem Rahmen hat den Vorteil, dass der Sattel beim Betätigen des Sicherungselements von dem Rahmen Weggedrückt wird. Somit wird es dem Fahrer erleichtert, den Sattel mit dem Rahmen zu lösen. Dadurch erhält der Fahrer unmittelbar eine visuelle Rückmeldung, ob der Sattel mit dem Rahmen verbunden ist.

In einer Ausführungsform kann der Sattel eine Ausnehmung und die Schublade einen Schließzylinder mit einer Schließnase aufweisen, wobei die Schließnase dazu ausgebildet sein kann in einer Sperrstellung des Schließzylinders in die Ausnehmung einzugreifen, wenn sich die Schublade in der eingeschobenen Position befindet.

Mit der vorstehend beschrieben Ausführungsform wird es möglich, die Schublade gegen das Öffnen durch unbefugte zu sichern. Dabei kann z.B. ein Zahlenschloss oder ein Schloss mit Schlüssel verwendet werden. Auch elektronische Schlösser sind denkbar.

Die genannte Aufgabe wird ferner durch eine Batteriebaugruppe nach Anspruch 5 gelöst. Insbesondere wird die Aufgabe gelöst durch eine Batteriebaugruppe für ein elektrisch antreibbares Motorfahrzeug, insbesondere für ein Motorrad, vorzugsweise für einen elektrischen Motorroller. Die Batteriebaugruppe umfasst:
- mindestens eine, insbesondere wiederaufladbare, Batterie;
- mindestens eine lösbare mechanische Verriegelung zur Verbindung des Batteriegehäuses mit einer mit elektrischer Energie zu versorgenden Einheit, insbesondere zur Verbindung der Batteriebaugruppe mit dem Motorfahrzeug;
- eine in einem Fach angeordnete Schublade,
wobei
die mechanische Verriegelung durch ein in der Schublade angeordnetes Verriegelungs-Betätigungselement betätigbar ist.

Mit der vorstehend genannten Lösung kann die Verriegelung zwischen Batteriebaugruppe und Motorfahrzeug gelöst werden. Es ist von Vorteil, dass das Verriegelungs-Betätigungselement in einer Schublade angeordnet ist, sodass es nicht versehentlich betätigt werden kann.

Die Schublade kann in einer Ausführungsform verriegelbar und/oder verschließbar ausgebildet sein.

Es wird somit ein Sicherheitsmechanismus bereitgestellt, der es verhindert, dass Unbefugte die Batteriebaugruppe unerlaubt entnehmen.

Es ist in einer Ausführungsform möglich, dass die Batteriebaugruppe mit einem ausziehbaren und/oder ausklappbaren und/oder ausschwenkbaren Betätigungselement betätigt, insbesondere gezogen bzw. geschoben, werden kann.

Das Betätigungselement kann als Hebel oder als Griff, insbesondere als Bügelgriff, ausgebildet sein. Der Griff weist vorzugsweise einen Greifabschnitt, der insbesondere mit der vollständigen Hand umgreifbar ist, auf. Vorzugsweise geht der Greifabschnitt in mindestens einen, vorzugsweise in zwei, Verlängerungsabschnitt(e) über. Bei dem mindestens einen Verlängerungsabschnitt kann es sich um ein stangenartiges bzw. schienenartiges Element handeln. Dieses stangenartige bzw. schienenartige Element ist insbesondere im bzw. am Batteriegehäuse ausklappbar und/oder ausschwenkbar und/oder ausziehbar, insbesondere teleskopierbar, gelagert.

In einem ersten Benutzungszustand, der dem Fahrzustand eines Motorfahrzeugs, insbesondere eines elektrischen Motorrollers, entspricht, kann der Verlängerungsabschnitt vorzugsweise vollständig im Batteriegehäuse gelagert sein. In einem weiteren Benutzungszustand, der dem vom Motorfahrzeug, insbesondere vom Motorroller, losgelösten Zustand der Batteriebaugruppe entspricht, kann der mindestens eine Verlängerungsabschnitt aus dem Gehäuse ausgeklappt und/oder ausgeschwenkt und/oder ausgezogen werden, so dass das Betätigungselement in einem zumindest teilweise ausgeklappten und/oder ausgeschwenkten und/oder ausgezogenen, insbesondere teilweise teleskopierten, Zustand vorliegt. Dies ist mit dem ausgezogenen Griff eines Koffers bzw. Trolleys vergleichbar. Ein ausgeklapptes und/oder ausgeschwenktes und/oder ausziehbares, insbesondere teleskopierbares, Betätigungselement erleichtert somit die Handhabung einer von einem Motorroller gelösten Batteriebaugruppe.

Die Batteriebaugruppe kann mit Hilfe des Betätigungselements beispielsweise zu einer Ladestation gezogen werden. In einem besonders bevorzugten Ausführungsbeispiel ist das Betätigungselement als Bügelgriff ausgebildet.

Das Batteriegehäuse kann einen Frontabschnitt, einen Rückabschnitt, zwei die Front- und Rückenabschnitte verbindende Seitenabschnitt, einen Deckelabschnitt und einen Bodenabschnitt umfassen, wobei das Batteriegehäuse vorzugsweise eine, insbesondere schlittenartige, Führungsvorrichtung aufweist, die auf eine, insbesondere schienenartige, Führungsvorrichtung des Motorfahrzeugs, bevorzugt eines Motorrollers, geschoben oder schiebbar ist.

Besonders bevorzugt sind am Batteriegehäuse mindestens zwei Rollen angeordnet. Diese sind vorzugsweise am Frontabschnitt bzw. am Übergangsabschnitt vom Frontabschnitt zum Bodenabschnitt des Batteriegehäuses ausgebildet. Mit Hilfe von mindestens zwei Rollen kann die Batteriebaugruppe besonders gleichmäßig gezogen werden. Die Rollen können Teil der beschriebenen Führungsvorrichtung der Batteriegruppe sein und/oder diese Funktion übernehmen. Die Rollen können also das Anordnen der Batteriegruppe an dem Motorfahrzeug erleichtern und beim Anordnen in der Führungsvorrichtung des Motorfahrzeugs geführt sein.

Die Front-, Rück-, Seiten- und Deckelabschnitte können sowohl flach als auch gebogen ausgebildet sein. Insbesondere können zumindest einzelne Verbindungs- bzw. Übergangsbereiche zwischen den einzelnen Gehäuseabschnitten bzw. Abschnitten des Batteriegehäuses angeschrägt und/oder gewölbt ausgebildet sein.

Die, insbesondere schienenartig ausgebildete, Führungsvorrichtung des Motorfahrzeugs bildet das Gegenstück zur, insbesondere schlittenartigen, Führungsvorrichtung des Batteriegehäuses. Die schlittenartige Führungsvorrichtung des Batteriegehäuses ist insbesondere im Bodenabschnitt des Batteriegehäuses ausgebildet.

Es ist möglich, dass das Batteriegehäuse der Batteriebaugruppe insbesondere in Fahrtrichtung bzw. entgegen der Fahrtrichtung auf der schienenartigen Führungsvorrichtung eines Motorrollers verschiebbar ist.

Die, insbesondere schlittenartig ausgebildete, Führungsvorrichtung des Batteriegehäuses geht vorzugsweise in eine Verriegelungsplatte bzw. in Verriegelungsplatten über. Die Verriegelungsplatte(n) wird (werden) vorzugsweise auf der, insbesondere schienenartig ausgebildeten, Führungsvorrichtung des Motorfahrzeugs geführt bzw. geschoben bzw. gerollt.

Das Motorfahrzeug, insbesondere der Motorroller, weist vorzugsweise eine Zentrierungshilfe auf. Die Zentrierungshilfe kann beispielsweise als dreiecksförmige und/oder U-förmige und/oder V-förmige Ausformung ausgebildet sein, so dass die Verriegelungsplatte bzw. die Verriegelungsplatten entlang dieser Ausformung geführt wird/werden, um anschließend in mindestens eine Verriegelungsausnehmung geführt zu werden. Die Rollen können den Anbringungsprozess erleichtern. Als Ausformung ist ein Element zu verstehen, das von einer Grundfläche absteht bzw. übersteht. Kanten der mindestens einen Verriegelungsplatte verlaufen beim Aufschieben der Batteriebaugruppe auf den Motorroller entlang der Kanten der Zentrierungshilfe.

In einer weiteren Ausführungsform der Erfindung weist das Batteriegehäuse im Bereich des Betätigungselements, insbesondere im Rückabschnitt, eine Eingriffsausnehmung auf, die derart ausgebildet ist, dass das Betätigungselement mit einer Hand umgreifbar ist. Im mit dem Motofahrzeug verbundenen Zustand der Batteriebaugruppe erstreckt sich der Greifabschnitt des Betätigungselements vorzugsweise quer zur Fahrtrichtung. Das Batteriegehäuse weist eine derartige Ausnehmung bzw. Eingriffsausnehmung auf, dass das Betätigungselement im Klammergriff gezogen, insbesondere hochgezogen, werden kann.

Die Batteriebaugruppe kann zur Effizienzerhöhung der im Batteriegehäuse befindlichen Batterie eine Passivkühlung und/oder eine Aktivkühlung aufweisen. Bei der Passivkühlung kann es sich beispielsweise um eine Anordnung von Kühlrippen handeln. Beispielsweise ist die Kühlrippen-Anordnung auf dem Rückabschnitt und/oder auf einen/den Seitenabschnitt(en) des Batteriegehäuses ausgebildet.

Bei der Passivkühlung kann es sich außerdem um mindestens eine Lufteinlassöffnung handeln. Durch eine entsprechend ausgebildete Lufteinlassöffnung kann während der Fahrt mit einem Motorroller Umgebungsluft durch die mindestens eine Lufteinlassöffnung in das Batteriegehäuse geführt werden, wobei die erwärmte Luft durch mindestens eine entsprechende Luftauslassöffnung aus dem Batteriegehäuse strömen kann. Es ist möglich, dass als Aktivkühlung mindestens ein Lüftungsrad im Batteriegehäuse befindlich ist. Auch eine aktive Wasserkühlung kann innerhalb des Batteriegehäuses ausgebildet sein. Als Anordnung von Kühlrippen können sogenannte Kühlrippenbleche verwendet werden.

Die Batteriebaugruppe kann des Weiteren mindestens einen Stromstecker umfassen. Mit Hilfe eines Stromsteckers wird die Batteriebaugruppe elektrisch mit dem Motorfahrzeug, insbesondere mit dem elektrischen Motorroller, verbunden.

Vorzugsweise weist die Batteriebaugruppe einen kombinierten Strom-/ Kommunikationsstecker auf. Mit Hilfe eines derartigen Steckers kann das Motorfahrzeug sowohl mit Strom versorgt werden bzw. von dem Motorfahrzeug Strom empfangen. Des Weiteren kann mit Hilfe eines derartigen kombinierten Strom-/Kommunikationssteckers eine Kommunikationsübertragung bzw. Kommunikationsverbindung zwischen der Batteriebaugruppe und dem Motorfahrzeug hergestellt werden. Vorzugsweise weist der kombinierte Strom-/Kommunikationsstecker eine Bus-Schnittstelle auf.

Der kombinierte Strom-/Kommunikationsstecker ist beispielsweise an einem Seitenabschnitt des Batteriegehäuses ausgebildet. Die Pins des Strom-/ Kommunikationssteckers sind vorzugsweise senkrecht zu einer Bodenfläche ausgebildet. Die Verbindung des Strom-/Kommunikationssteckers mit einer Strom-/Kommunikationsbuchse eines Motorfahrzeugs, insbesondere eines elektrischen Motorrollers, kann demnach durch Aufschieben des Steckers auf die Buchse erfolgen.

Der kombinierte Strom-/Kommunikationsstecker kann beispielsweise durch Hochheben bzw. Hochziehen der schlittenartigen Führungsvorrichtung des Batteriegehäuses entlang der schienenartigen Führungsvorrichtung des Motorfahrzeugs von einer kombinierten Strom-/Kommunikationsbuchse des Motorfahrzeugs gelöst werden. Vorzugsweise liegt beim Abziehen des Strom-/Kommunikationssteckers von der Strom-/Kommunikationsbuchse kein Strom an. Vorzugweise wird vor dem Entfernen der Batteriebaugruppe von einem Motorfahrzeug der Stromkreis zwischen dem Motorfahrzeug und der Batteriebaugruppe unterbrochen. Vorzugsweise liegt bei dem Lösen des kombinierten Strom-/Kommunikationssteckers von der kombinierten Strom-/Kommunikationsbuchse kein Strom an der, durch den kombinierten Strom-/Kommunikationsstecker und kombinierten Strom-/Kommunikationsbuchse gebildeten, kombinierten Strom-/ Kommunikationsverbindung an.

Vorzugsweise ist eine mechanische Verriegelung der Batteriebaugruppe im Bodenabschnitt des Batteriegehäuses ausgebildet. Die mechanische Verriegelung kann beispielsweise als Verriegelungshaken ausgebildet sein.

Bei dem Verriegelungs-Betätigungselement kann es sich beispielsweise um eine Schnur oder eine Kette oder ein Band oder eine Schlaufe handeln. Durch Zug an der Schnur oder der Kette oder an dem Band oder an der Schlaufe kann die mechanische Verriegelung, insbesondere der Verriegelungshaken, betätigt werden.

In einer Ausführungsform kann in dem Fach eine Schublade angeordnet sein und das Verriegelungs-Betätigungselement kann derart angeordnet und ausgebildet sein, dass das Verriegelungs-Betätigungselement im ausgezogenen Zustand der Schublade zugänglich bzw. betätigbar ist.

Wenn das Verriegelungs-Betätigungselement innerhalb einer Schublade angeordnet ist, die innerhalb des Fachs angeordnet ist, wird der Zugriff auf das Verriegelungs-Betätigungselement erleichtert. Der Fahrer muss lediglich die Schublade ausziehen, um Zugang zu dem Verriegelungs-Betätigungselement zu erlangen. In einer Ausführungsform ist es auch möglich, dass die Schublade mit einem Schloss verriegelbar ist. Durch das Vorsehen eines Schlosses wird es möglich, dass unberechtigten der Zugriff auf das Verriegelungs-Betätigungselement unmöglich bzw. erschwert wird.

An dem Batteriegehäuse, insbesondere frontabschnittsseitig, kann mindestens eine Rolle angeordnet sein, so dass die Batteriebaugruppe im von dem Motorfahrzeug getrennten Zustand mit Hilfe des Betätigungselements rollbar ist. Es ist möglich, dass die mindestens eine Rolle innerhalb des Batteriegehäuses versenkbar ausgebildet ist. Das Betätigungselement dient beim Rollen als Handgriff. Die Batteriebaugruppe ist vorzugsweise Trolley-artig ziehbar ausgebildet.

Die Batteriebaugruppe kann außerdem mindestens eine Netzbuchse zur Aufladung der mindestens einen Batterie aufweisen. Eine Netzbuchse dient zur Aufladung der mindestens einen Batterie bzw. zur Aufladung mindestens eines Batteriesatzes. In die mindestens eine Netzbuchse kann ein Stromstecker eingeführt werden, so dass der mindestens eine Batteriesatz aufgeladen werden kann.

Es ist möglich, dass in dem Batteriegehäuse mehrere Akkusätze bzw. Battery Packs angeordnet sind. Vorzugsweise sind mindestens zwei Netzbuchsen ausgebildet. Dies ermöglicht eine schnellere Ladung von mehreren Akkusätzen.

Des Weiteren kann die Batteriebaugruppe mindestens eine Bluetooth-Schnittstelle und/oder mindestens eine USB-Buchse umfassen. Es ist möglich, dass die mindestens eine Netzbuchse und/oder die mindestens eine Bluetooth-Schnittstelle und/oder die mindestens eine USB-Buchse innerhalb der vorzugsweise verschließbaren und/oder verriegelbaren Schublade ausgebildet ist/sind. Dies ermöglicht einen Manipulationsschutz, so dass lediglich der Besitzer eines Schlüssels bzw. Zugangssystems zur Schublade auf eine USB-Buchse und/oder eine Netzbuchse zugreifen kann und die mindestens eine Bluetooth-Schnittstelle ein- bzw. ausschalten kann.

Mit Hilfe einer USB-Buchse können Programme geladen werden. Auch das Auslesen eines Fehlerspeichers ist mit Hilfe einer USB-Buchse möglich. Des Weiteren kann mit Hilfe einer Bluetooth-Schnittstelle und/oder mit Hilfe einer USB-Buchse ein innerhalb der Batteriebaugruppe, insbesondere innerhalb des Batteriegehäuses, angeordneter Lautsprecher angesteuert werden. Es ist möglich, dass über die Bluetooth-Schnittstelle und/oder über die USB-Buchse Audiodateien an die Batteriebaugruppe gesendet werden können.

Im Batteriegehäuse kann mindestens ein Lautsprecher eingebaut sein. Bei dem Lautsprecher handelt es sich vorzugsweise um einen Resonanzlautsprecher. Vorteilhafterweise kann ein Abschnitt des Batteriegehäuses als Resonanzfläche ausgebildet sein.

In einer weiteren Ausführungsform der Erfindung kann auf dem Batteriegehäuse, insbesondere deckelabschnittsseitig, ein Sattel ausgebildet sein. Ein Sattel eines Motorrollers ist folglich als Element der Batteriebaugruppe ausgebildet. Der Sattel ist vorzugsweise mit dem Batteriegehäuse, insbesondere dem Deckelabschnitt des Batteriegehäuses verbunden, insbesondere verklebt und/oder verrastet. Der Sattel kann aus einem Schaumstoffmaterial gebildet sein.

Vorzugsweise weist der Sattel eine ergonomisch vorteilhafte Form auf. Beispielsweise weist der Sattel ein (im Wesentlichen) V-förmiges und/oder U-förmiges Querschnittsprofil auf. Das Querschnittsprofil ist als in Fahrtrichtung verlaufender Längsschnitt sichtbar. Zumindest abschnittsweise kann der Sattel die Form eines (im Wesentlichen) hyperbolischen Paraboloids aufweisen.

Des Weiteren ist es möglich, dass die Batteriebaugruppe einen DC-DC-Konverter, also einen Gleichstrom-Gleichstromwandler und/oder ein Batterieladegerät und/oder eine Batterie-Kontrolleinheit umfasst. Außerdem kann die Batteriebaugruppe einen Notaus-Knopf aufweisen. Die Batteriebaugruppe kann beispielsweise eine 48 V/12 V-Spannungsversorgung zur Verfügung stellen. Es ist möglich, dass die 48 V-Spannungsversorgung direkt von mindestens einem Batteriesatz zur Verfügung gestellt wird. Die 12 V-Spannungsversorgung kann beispielsweise mit Hilfe des DC-DC-Konverters realisiert werden.

Die Ladung des Batteriesatzes kann über ein integriertes Batterieladegerät erfolgen, wobei das integrierte Batterieladegerät über die mindestens eine Netzbuchse mit Strom versorgt werden kann.

Aufgrund der mit Hilfe des kombinierten Strom-/Kommunikationssteckers herstellbaren Kommunikationsverbindung, ist es möglich, dass Daten hinsichtlich der Batterie, wie z.B. die Temperatur der Batterie und/oder der Ladezustand der Batterie, an eine Steuerung des Motorfahrzeugs und/oder an eine Anzeigeeinheit des Motorfahrzeugs übertragen werden können.

Ein nebengeordneter Aspekt der Erfindung betrifft ein elektrisch angetriebenes Motorfahrzeug nach Anspruch 11. Insbesondere betrifft die Erfindung ein Motorfahrzeug, insbesondere ein elektrisch angetriebenes Motorrad, insbesondere einen elektrischen Motorroller, umfassend mindestens eine auswechselbare erfindungsgemäße Batteriebaugruppe oder eine erfindungsgemäße Sitzbaugruppe. Die Batteriebaugruppe oder Sitzbaugruppe ist vorzugsweise an einem hinteren Rahmenteil des Motorfahrzeugs, insbesondere des Motorrollers, lösbar befestigt bzw. lösbar verankert. Im eingebauten Zustand weist ein/der Frontabschnitt des Batteriegehäuses bzw. des Rahmens in Fahrtrichtung bzw. in Richtung des Vorderrads des Motorfahrzeug, insbesondere des elektrischen Motorrollers. Ein/der Rückabschnitt des Batteriegehäuses bzw. des Rahmens weist vorzugsweise dementsprechend entgegen der Fahrtrichtung bzw. in Richtung des Hinterrads.

Das Motorfahrzeug, insbesondere der Motorroller, kann des Weiteren eine, insbesondere schienenartig ausgebildete, Führungsvorrichtung aufweisen, wobei das Batteriegehäuse bzw. die Sitzbaugruppe nach dem Lösen einer/der mechanischen Verriegelung der Batteriebaugruppe bzw. der Sitzbaugruppe mit Hilfe einer/der, vorzugsweise schlittenartigen, Führungsvorrichtung der Batteriebaugruppe bzw. Sitzbaugruppe von der Führungsvorrichtung des Motorfahrzeugs, insbesondere des Motorrollers, entgegen der Fahrtrichtung schiebbar ist. Beim Lösen der mechanischen Verriegelung wird ein/der Verriegelungshaken aus dem Verriegelungsgegenstück des Motorfahrzeugs, insbesondere des Motorrollers, gelöst. Anschließend kann die Batteriebaugruppe bzw. die Sitzbaugruppe, insbesondere das Batteriegehäuse bzw. der Rahmen der Sitzbaugruppe, vom Rahmen des Motorfahrzeugs, insbesondere Motorrollers, geschoben werden.

Das Motorfahrzeug, insbesondere der elektrische Motorroller, umfasst vorzugsweise ein mit der mechanischen Verriegelung zusammenwirkend ausgebildetes Verriegelungsgegenstück. Das Verriegelungsgegenstück ist vorzugsweise ein Verriegelungsbolzen bzw. eine Verriegelungsaufnahme für einen Verriegelungshaken.

Die Aufgabe wird ferner gelöst durch ein Verfahren nach Patentanspruch 15.

Insbesondere wird die Aufgabe gelöst durch ein Verfahren zur Konfektionierung des Sattels einer Sitzbaugruppe wie vorstehend beschrieben und/oder eines Sattels einer Batteriebaugruppe wie vorstehend beschrieben und/oder eines elektrische antreibbaren Motorfahrzeugs wie ebenfalls vorstehend beschrieben, wobei ein Sicherungselement einen Sattel in einer Sicherungsposition mit einem Rahmen, insbesondere umfassend ein Batteriegehäuse, lösbar verbindet, umfassend:
- Überführen des Sicherungselements von einer Verankerungsposition in eine Freigabeposition zur Freigabe eines ersten Sattels;
- Lösen des Sattels;
- Einsetzen eines zweiten, insbesondere eines vom ersten Sattel unterschiedlichen, zweiten Sattels, insbesondere eines Sattels mit unterschiedliche Sitzhöhe;
- Überführen des Sicherungselements von der Freigabeposition in die Verankerungsposition zum Sichern des zweiten Sattels.

Mittels des angegeben Verfahrens wird es ermöglicht, dass ein Fahrer auf einfache Art und Weise den Sattel konfektionieren kann.

Vorteilhafte und zweckmäßige Ausgestaltungen der erfindungsgemäßen Batteriebaugruppe, der Sitzbaugruppe oder des erfindungsgemäßen Motorfahrzeugs, insbesondere des elektrischen Motorrollers sowie des erfindungsgemäßen Verfahrens, sind in den Unteransprüchen angegeben.

Im Rahmen dieser Patentanmeldung kann eine Sitzbaugruppe auch eine Batteriebaugruppe sein. Zum Beispiel kann auch bei einer Sitzbaugruppe eine Batterie vorgesehen sein. Insbesondere lassen sich die Ausführungsformen und Ausführungsbeispiele der Batteriebaugruppe oder der Sitzbaugruppe mit denen der Sitzbaugruppe bzw. Batteriebaugruppe beliebig kombinieren.

Nachfolgend wird die Erfindung anhand von Ausführungsbeispielen für einen elektrisch angetriebenen Motorroller beschrieben, welche anhand von Abbildungen näher erläutert werden.

Hierbei zeigen:
- Fig. 1:: einen elektrisch angetriebenen Motorroller in perspektivischer Ansicht;

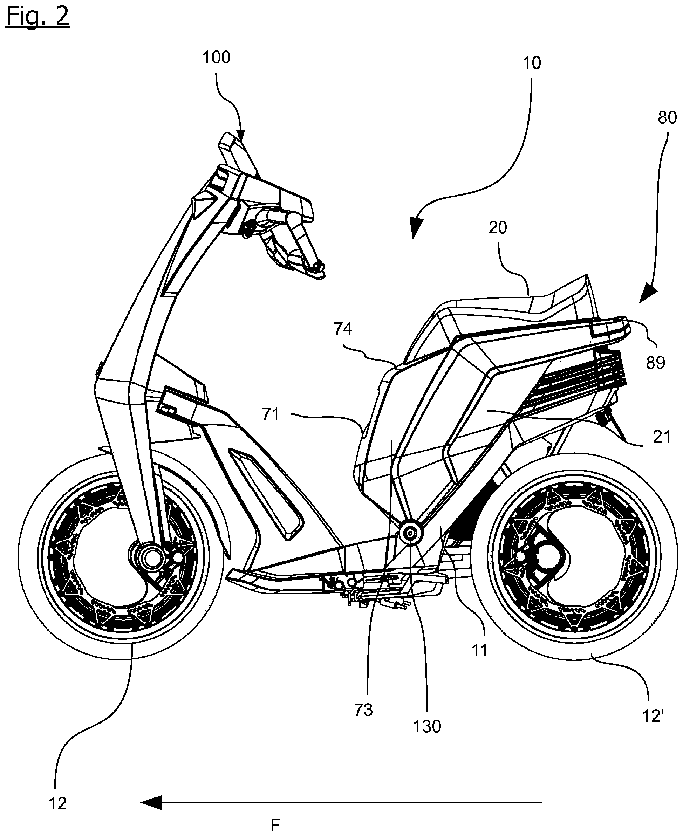

- Fig. 2:: den elektrisch betriebenen Motorroller der Fig. 1 in einer seitlichen Ansicht;

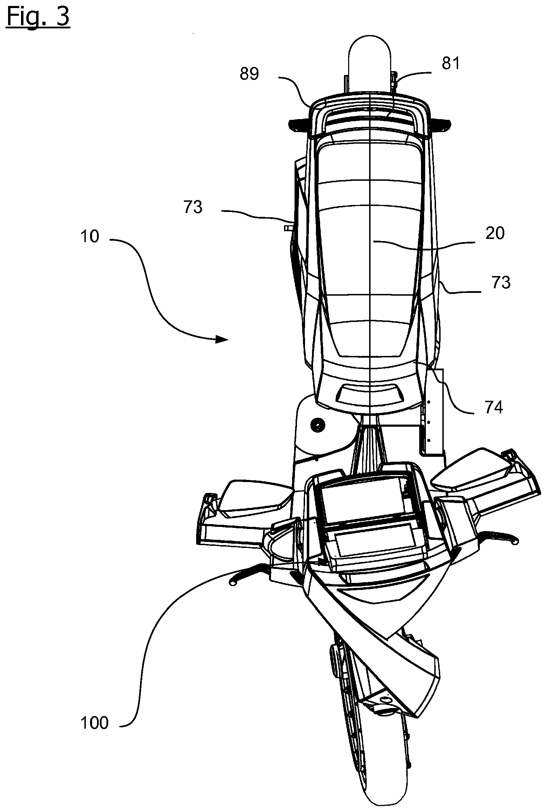

- Fig. 3:: den elektrisch betriebenen Motorroller der Fig. 1 und 2 in einer Draufsicht;
- Fig. 4a-4c:: verschiedene perspektivische Ansichten hinsichtlich einer erfindungsgemäßen Batteriebaugruppe, gemäß einer ersten Ausführungsform;
- Fig. 5:: eine transparente Ansicht hinsichtlich der im Batteriegehäuse der Batteriebaugruppe befindlichen Komponenten;
- Fig. 6:: hinterer Rahmenteil ohne befestigte Batteriebaugruppe;
- Fig. 7:: einen Motorroller mit einer eingebauten Batteriebaugruppe gemäß einem zweiten Ausführungsbeispiel;
- Fig. 8a-8c:: verschiedene perspektivische Ansichten hinsichtlich einer erfindungsgemäßen Batteriebaugruppe gemäß einer zweiten Ausführungsform;
- Fig. 9:: eine transparente Ansicht hinsichtlich der im Batteriegehäuse der Batteriebaugruppe befindlichen Komponenten;
- Fig. 10: einen Schnitt einer Batteriebaugruppe mit Schublade in einer perspektivischen Ansicht; und
- Fig. 11: eine perspektivische Ansicht eines Rollers mit abgenommenen Sattel.

In der nachfolgenden Beschreibung werden für gleiche und gleichwirkende Teile dieselben Bezugsziffern verwendet.

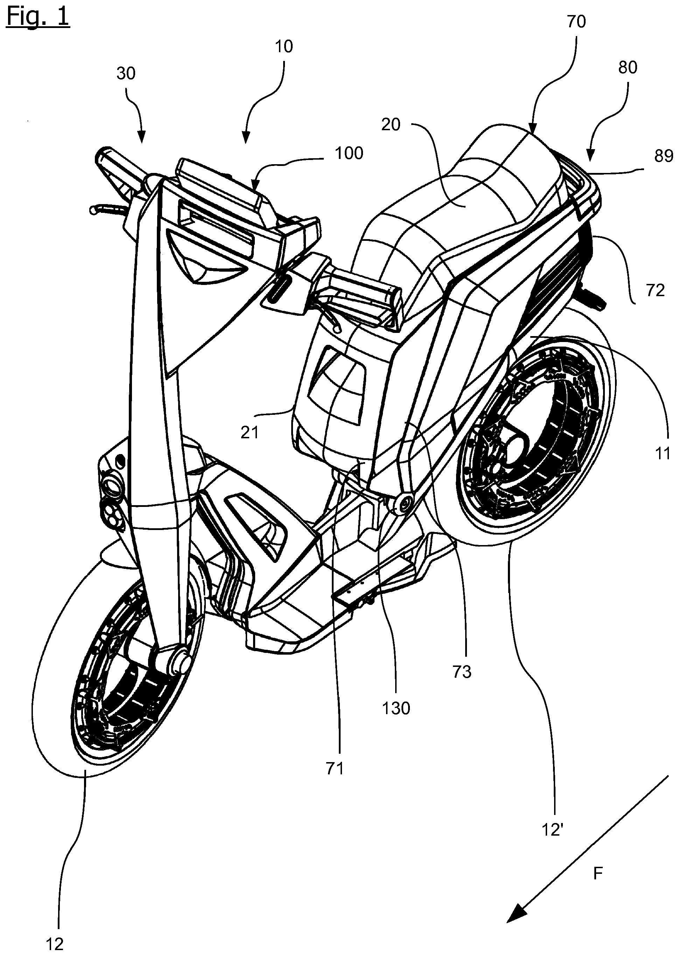

Fig. 1 zeigt eine Gesamtansicht eines erfindungsgemäßen Rollers bzw. elektrischen Motorrollers 10. Der Motorroller 10 hat eine Karosserie, an der ein Vorderrad 12 und ein Hinterrad 12' drehbeweglich befestigt sind. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil, insbesondere am hinteren Rahmenteil 11 befindet sich eine Batteriebaugruppe bzw. Sitzbaugruppe 70 sowie ein zur Batteriebaugruppe 70 zugehöriges Batteriegehäuse bzw. Rahmen 21. Ebenfalls zu erkennen ist ein Sattel 20.

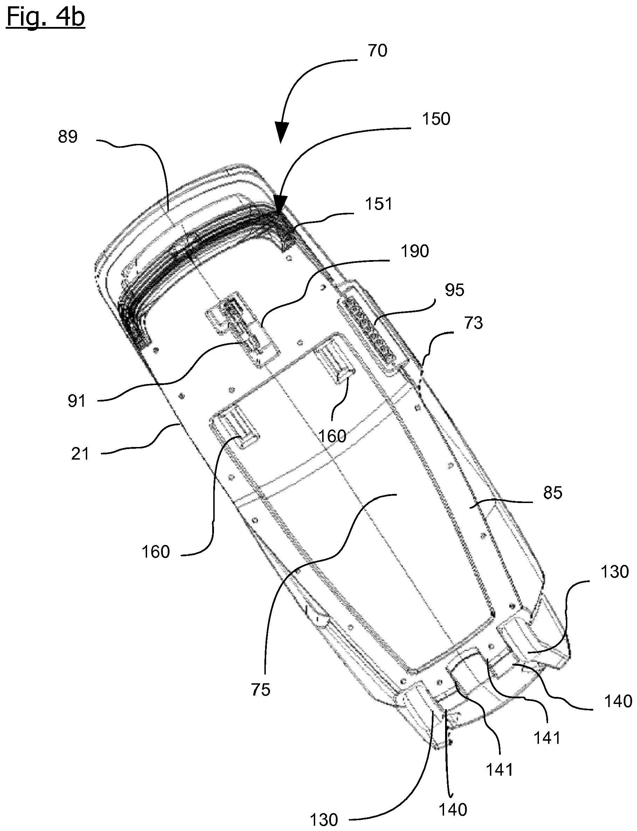

Die Batteriebaugruppe 70 bzw. Sitzbaugruppe umfasst ein Batteriegehäuse 21 bzw. Rahmen mit einem Frontabschnitt 71, einem Rückabschnitt 72, zwei die Front- und Rückabschnitte 71 und 72 verbindende Seitenabschnitt 73 und einen Bodenabschnitt 75 (siehe hierzu Fig. 4b). Ebenfalls zu erkennen ist ein Betätigungselement 80, das in Form eines Bügelgriffes ausgebildet ist.
Der Greifabschnitt 89 ist im in den Motorroller 10 eingebauten Zustand quer zur Fahrtrichtung F angeordnet.

Um ein Umgreifen des Betätigungselements 80, insbesondere des Greifabschnitts 89, zu ermöglichen, weist das Batteriegehäuse 21 im Bereich des Rückabschnitts 72 eine Eingriffsausnehmung 81 auf. Diese Eingriffsausnehmung 81 ist derart ausgebildet, dass das Betätigungselement 80, insbesondere der Greifabschnitt 89, mit der Hand vollständig umgreifbar ist.

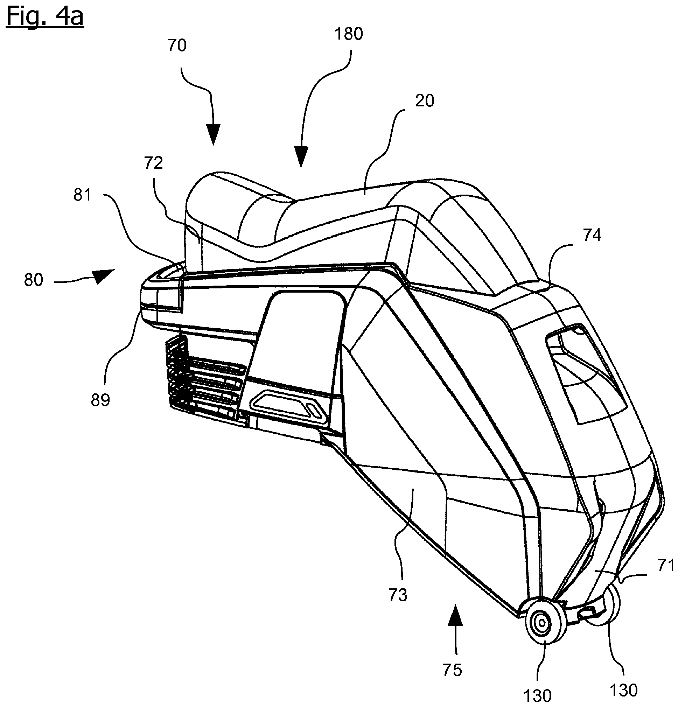

In den Figuren 4a bis 4c ist die Batteriebaugruppe bzw. die Sitzbaugruppe 70 dargestellt. Das Batteriegehäuse 21 umfasst einen Frontabschnitt 71, einen Rückabschnitt 72, zwei die Front- und Rückabschnitte 71 und 72 verbindende Seitenabschnitte 73, einen Deckelabschnitt 74 und einen Bodenabschnitt 75 (siehe Fig. 4b). Ebenfalls zu erkennen ist ein Betätigungselement 80, das in Form eines Bügelgriffes ausgebildet ist. Der Greifabschnitt 89 ist im in den Motorroller 10 eingebauten Zustand quer zur Fahrtrichtung F angeordnet.

Um ein Umgreifen des Greifabschnitts 89 zu ermöglichen, weist das Batteriegehäuse 21 im Bereich des Betätigungselements 80, nämlich im Rückabschnitt 72 eine Eingriffsausnehmung 81 auf. Diese Eingriffsausnehmung 81 ist derart ausgebildet, dass der Greifabschnitt 89 mit der Hand vollständig umgreifbar ist.

Die Batteriebaugruppe 70 weist zwei Rollen 130 auf. Diese Rollen 130 sind vorzugsweise am Frontabschnitt 71 bzw. am Übergangsabschnitt vom Frontabschnitt 71 zum Bodenabschnitt 75 und zu den Seitenabschnitten 73 des Batteriegehäuses 21 ausgebildet. Mit Hilfe von mindestens zwei Rollen 130 kann die Batteriebaugruppe 70 besonders gleichmäßig gezogen werden.

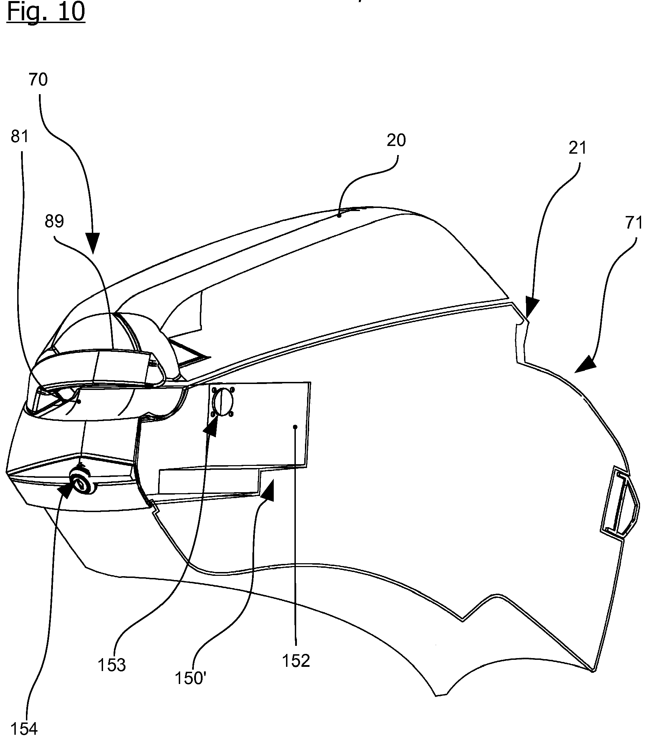

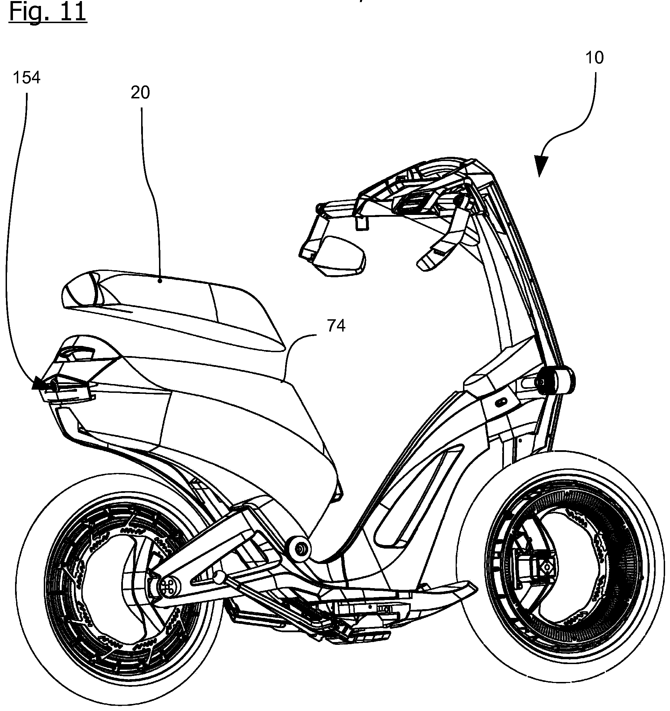

Der Sattel 20 ist als Element der Batteriebaugruppe 70 ausgebildet. Der Sattel 20 ist in dem dargestellten Ausführungsbeispiel mit dem Batteriegehäuse 21, insbesondere dem Deckelabschnitt 74 des Batteriegehäuses 21, verbunden, insbesondere verklebt und/oder verrastet. Der Sattel 20 ist vorzugsweise aus einem Schaumstoffmaterial gebildet. In einem Ausführungsbeispiel ist der Sattel abnehmbar ausgebildet, sodass der Sattel 20 konfektioniert werden kann (siehe auch Figuren 10 und 11).

Der dargestellte Sattel 20 weist eine ergonomisch vorteilhafte Form auf. Zumindest abschnittsweise ist ein V-förmiges Querschnittsprofil 180 zu erkennen. Das Querschnittsprofil 180 ist vorzugsweise als in Fahrtrichtung F verlaufender Längsschnitt sichtbar. Zumindest abschnittsweise kann der Sattel 20 die Form eines hyperbolischen Paraboloids aufweisen. Quer zur Fahrtrichtung F bzw. parallel zum Greifabschnitt 89 ist ebenfalls eins Querschnittsprofil ausgebildet, wobei dieses Querschnittsprofil zumindest abschnittsweise U-förmig ausgebildet ist. Verschiedene Sattel 20 sind u.a. durch die Sitzhöhe charakterisiert. So ist es möglich, dass ein Sattel 20 mit einer hohen Sitzhöhe gegen einen Sattel 20 ausgetauscht wird, der eine niedrige Sitzhöhe aufweist. Durch die Auswahl des Sattels 20 kann die Sitzhöhe an den Fahrer optimal angepasst werden.

In Fig. 4b ist der Bodenabschnitt 75 dargestellt. Im Bodenabschnitt 75 ist eine Vertiefung 190 ausbildet, wobei in dieser Vertiefung 190 bzw. Ausnehmung ein Element einer mechanischen Verriegelung 91 ausgebildet ist. Bei der mechanischen Verriegelung 91 handelt es sich um einen Verriegelungshaken. Mit Hilfe des Verriegelungshakens 91, kann die Batteriebaugruppe 70, insbesondere das Batteriegehäuse 21, mit einem Motorroller 10 verbunden werden.

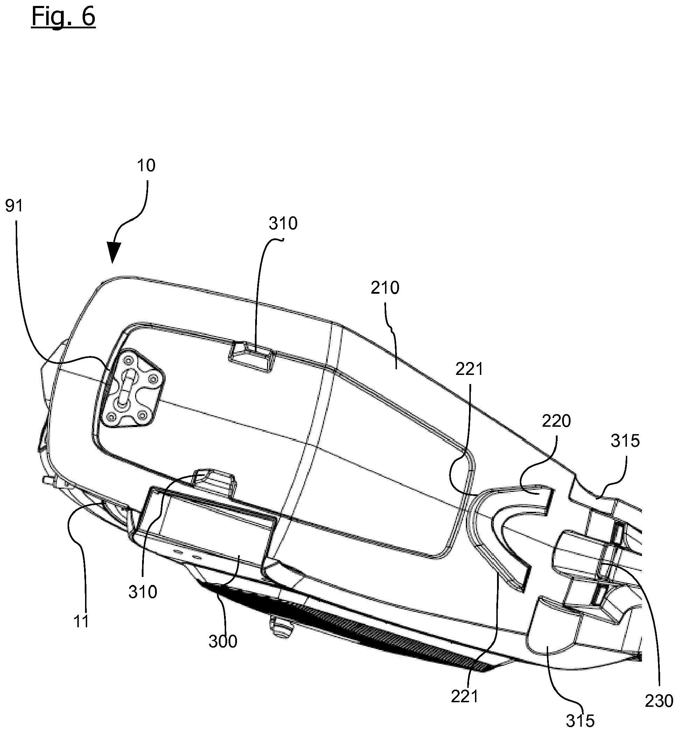

Im Bodenabschnitt 75 des Batteriegehäuses 21 ist eine, insbesondere schlittenartige, Führungsvorrichtung 85 ausgebildet, die auf eine, insbesondere schienenartige, Führungsvorrichtung 210 des Motorrollers 10, geschoben oder schiebbar ist (siehe Fig. 6).

Die Führungsvorrichtung 85 des Batteriegehäuses 21 geht vorzugsweise in Verriegelungsplatten 140 über. Die Verriegelungsplatten 140 werden auf der Führungsvorrichtung 210 der zu versorgenden Einheit 10 geführt bzw. geschoben.

Der Motorroller 10 (siehe Fig. 6) weist vorzugsweise eine Zentrierungshilfe 220 auf. Die Zentrierungshilfe 220 kann beispielsweise als V-förmige Ausformung ausgebildet sein, so dass die Verriegelungsplatten 140 entlang dieser Ausformung 220 geführt werden, um anschließend in Verriegelungsausnehmungen 230 geführt zu werden. Die V-Form der Zentrierungshilfe 220 ist derart auf dem Motorroller 10 ausgebildet, dass der Scheitel des Vs entgegen der Fahrtrichtung F, bzw. in Richtung des hinteren Endes des hinteren Rahmenteils 11 weist. Kanten 141 der Verriegelungsplatten 140 verlaufen beim Aufschieben der Batteriebaugruppe 70 auf den Motorroller 10 entlang der Kanten 221 der Zentrierungshilfe 220.

In Fig. 4b ist außerdem ein kombinierter Strom-/Kommunikationsstecker 95 zu erkennen. Mit Hilfe eines derartigen Steckers 95 kann der Motorroller 10 mit Strom versorgt werden. Des Weiteren kann mit Hilfe eines derartigen kombinierten Strom-/Kommunikationssteckers 95 eine Kommunikationsübertragung bzw. Kommunikationsverbindung zwischen der Batteriebaugruppe 70 und dem Motorroller 10 hergestellt werden. Vorzugsweise weist der kombinierte Strom-/Kommunikationsstecker 95 eine Bus-Schnittstelle auf.

Der kombinierte Strom-/Kommunikationsstecker 95 ist im Bereich des Bodenabschnitts 75 an einem Seitenabschnitt 73 des Batteriegehäuses 21 ausgebildet. Die Pins des Strom-/ Kommunikationssteckers sind vorzugsweise senkrecht zum Bodenabschnitt 75 ausgebildet. Die Verbindung des Strom-/Kommunikationssteckers 95 mit einer Strom-/Kommunikationsbuchse 300 des Motorrollers 10 (siehe Fig. 6), kann demnach durch Aufschieben des Steckers 95 auf die Buchse 300 erfolgen.

Im Zusammenhang mit den Fig. 4b und 6 wird auch klar, dass im Batteriegehäuse 21, insbesondere im Bodenabschnitt 75, mehrere Verriegelungsausnehmungen 160 ausgebildet sein können. Diese Verriegelungsausnehmungen 160 dienen zum Einrasten/Aufnehmen von Verriegelungsausformungen 310 (siehe Fig. 6) des Rahmenteils 11 des Motorrollers 10. Am Motorroller 10 können außerdem Ausnehmungen 315 ausgebildet sein, in die die Rollen 130 der Batteriebaugruppe 70 gleiten können.

Im Batteriegehäuse 21 ist in einem Ausführungsbeispiel rückabschnittsseitig ein Fach 150 ausgebildet. Dieses Fach 150 ist in einem Ausführungsbeispiel verschließbar und/oder verriegelbar ausgebildet. Durch Abklappen bzw. Abheben eines entsprechend verschließbaren und/oder verriegelbaren Batteriegehäuseabschnitts bzw. Deckels 151 kann Zugang zu dem Fach 150 hergestellt werden. Vorzugsweise ist in dem Fach 150 ein/das Verriegelungs-Betätigungselement, insbesondere eine/die Schnur oder eine/die Kette und/oder ein/das Band und/oder eine/die Schlaufe (nicht dargestellt), angeordnet. Mit Hilfe einer Schnur oder einer Kette oder mit Hilfe eines Bandes oder einer Schlaufe kann die mechanische Verriegelung 91, insbesondere ein Verriegelungshaken, betätigt werden.

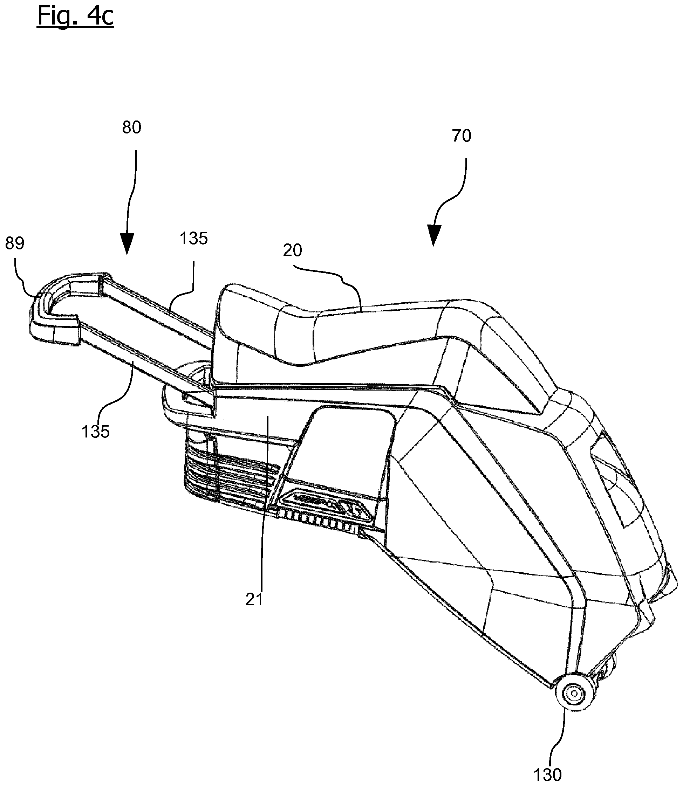

In Fig. 4c ist zu erkennen, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im dargestellten Zustand aus dem Batteriegehäuse 21 ausgezogen.

In dem dargestellten Benutzungszustand, der dem vom Motorroller 10 losgelösten Zustand der Batteriebaugruppe 70 entspricht, sind die Verlängerungsabschnitte 135 derart aus dem Gehäuse 21 ausgezogen, dass das Betätigungselement 80 in einem zumindest teilweise ausgezogenen, insbesondere teilweise teleskopierten, Zustand vorliegt. Die Batteriebaugruppe 70 kann mit Hilfe der Rollen 130 einfach transportiert werden.

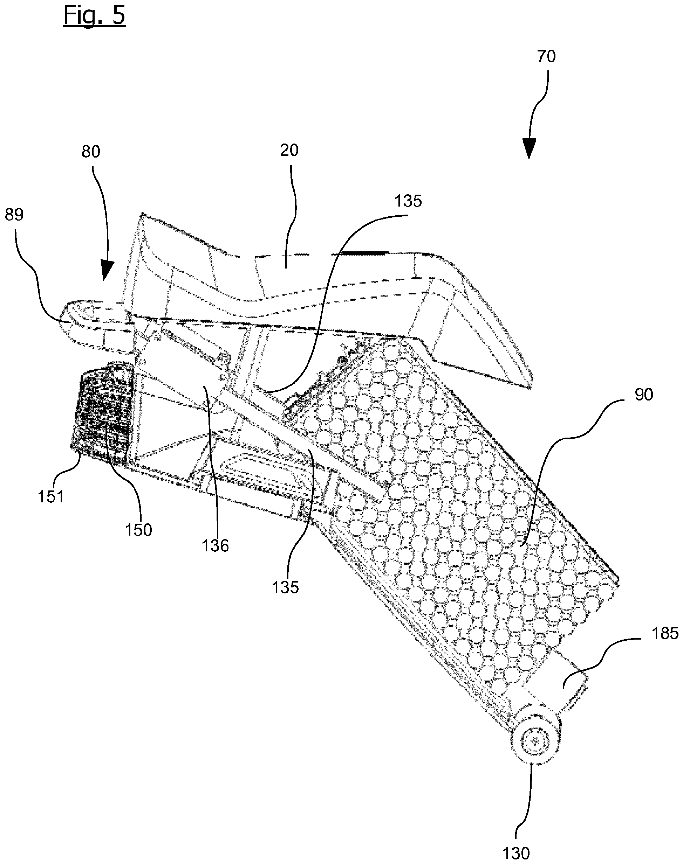

In der Fig. 5 werden in einer teiltransparenten Ansicht (die Batteriegehäuseabschnitte sind hier nicht dargestellt) die im Batteriegehäuse 21 befindlichen Komponenten dargestellt.

Zu erkennen ist, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im Batteriegehäuse 21 ausziehbar, insbesondere teleskopierbar, gelagert.

In einem ersten Benutzungszustand, der dem Fahrzustand eines elektrischen Motorrollers 10 entspricht, sind die Verlängerungsabschnitte 135 vorzugsweise vollständig im Batteriegehäuse 21 gelagert.

Die Verlängerungsabschnitte 135 können in Führungsschienen 136 gelagert sein.

Im Batteriegehäuse 21 ist ein Lautsprecher 185 eingebaut. Bei dem Lautsprecher 185 handelt es sich vorzugsweise um einen Resonanzlautsprecher. Vorteilhafterweise kann ein Abschnitt, insbesondere der Frontabschnitt 71, des Batteriegehäuses 21 als Resonanzfläche ausgebildet sein. Der Lautsprecher 185 ist zwischen der Batterie 90 und einem Abschnitt, insbesondere dem Frontabschnitt 71, des Batteriegehäuses 21 eingebaut.

In Fig. 6 wird ein hinterer Rahmenteil 11 eines Motorrollers 10 dargestellt. Die Wirkweise der Zentrierungshilfe 220, der Buchse 300 sowie der Verriegelungsausformungen 310 ist vorhergehend bereits beschrieben.

Ebenfalls zu erkennen ist ein Teil der mechanischen Verriegelung 91, die eine Verriegelung der Batteriebaugruppe 70 mit dem Motorroller 10 ermöglicht. In den dargestellten Bügel der Verriegelung 91 kann ein Haken der Batteriebaugruppe 70 eingreifen, sodass eine mechanische Verriegelung ermöglicht wird. Durch Betätigen einer Schnur/einer Kette/eines Bandes/einer Schlaufe kann der Haken der Batteriebaugruppe 70 aus dem Bügel gelöst werden, sodass die mechanische Verriegelung gelöst werden kann.

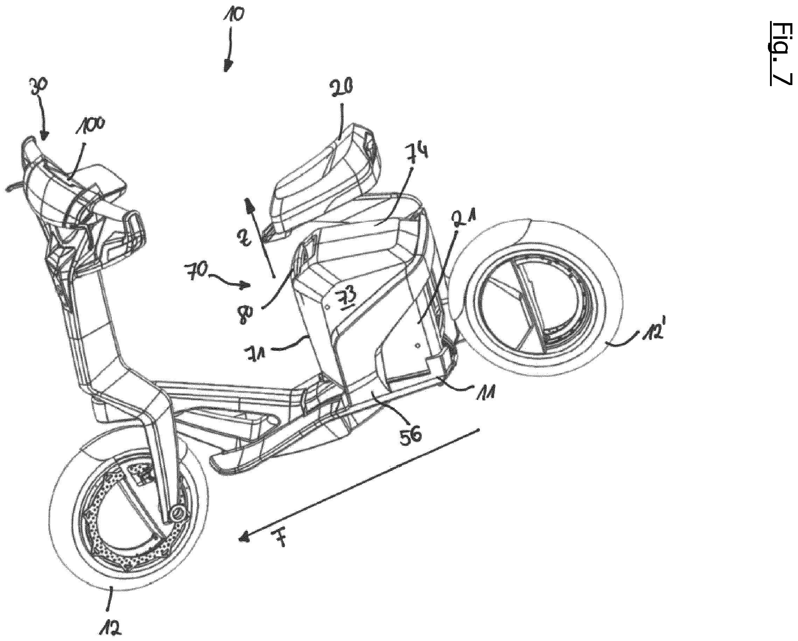

Fig. 7 zeigt die Gesamtansicht eines erfindungsgemäßen Rollers bzw. Motorrollers 10. Der Motorroller 10 hat eine Karosserie, an der ein Vorderrad 12 und ein Hinterrad 12' drehbeweglich befestigt sind. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil, insbesondere am hinteren Rahmenteil 11 befindet sich ein Batteriegehäuse 21. Ebenfalls zu erkennen ist ein Sattel 20, der oberhalb des Batteriegehäuses 21 angeordnet bzw. ausgebildet ist.

Als Antrieb des dargestellten Motorrollers 10 dient ein Elektromotor, dessen Stromquelle innerhalb des Batteriegehäuses 21 angeordnet ist. Das Batteriegehäuse 21 ist innerhalb eines zwischen Sattel 20 und hinteren Rahmenteil 11 angeordneten Halterahmen 56 lösbar verankert. Das Batteriegehäuse 21 bzw. die Batteriebaugruppe 70 kann demnach aus dem Halterahmen 56 entfernt werden.

Die Lenkeinrichtung 30 ist im oberen Bereich T-förmig ausgebildet. Mittig in diesem oberen Bereich der Lenkeinrichtung 30 ist eine Anzeige 100 ausgebildet.

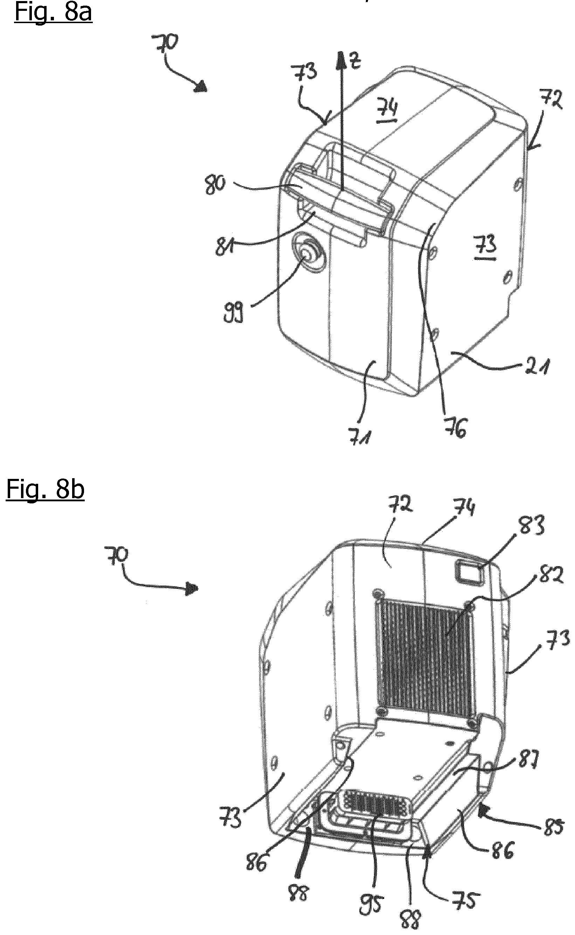

In den Figuren 8a bis 8c ist die Batteriebaugruppe 70 dargestellt. Das Batteriegehäuse 21 umfasst eine Frontplatte 71', eine Rückplatte 72', zwei die Front- und Rückplatte 71' und 72' verbindende Seitenplatten 73', eine Deckelplatte 74' und einen Bodenabschnitt 75. Ebenfalls zu erkennen ist ein Betätigungselement 80, das in Form eines Griffes ausgebildet ist. Der Griff 80 ist im in den Motorroller 10 eingebauten Zustand quer zur Fahrtrichtung F angeordnet. Das Betätigungselement 80 ist insbesondere mit einer Feder vorgespannt.

Um ein Umgreifen des Betätigungselements 80 zu ermöglichen, weist das Batteriegehäuse 21 im Bereich des Betätigungselements 80, nämlich im Übergangsbereich 76 von der Frontplatte 71' zur Deckelplatte 74' eine Eingriffsausnehmung 81 auf. Diese Eingriffsausnehmung 81 ist derart ausgebildet, dass das Betätigungselement 80 mit der Hand vollständig umgreifbar ist.

Die Batteriebaugruppe 70 weist eine Passivkühlung in Form von einer Kühlrippenplatte 82 auf. Diese Kühlrippenplatte 82 ist auf der Rückplatte 72' des Batteriegehäuses 21 ausgebildet. Auf der Rückplatte 72' ist des Weiteren eine Netzbuchse 83 ausgebildet. Die Netzbuchse 83 ist in den dargestellten Ansichten abgedeckt, so dass die Netzbuchse 83 nicht verschmutzt wird. In diese Netzbuchse 83 ist ein Netzstecker einführbar, so dass die im Batteriegehäuse 21 befindliche Batterie 90 aufgeladen werden kann.

Das Batteriegehäuse 21 weist des Weiteren eine schlittenartige Führungsvorrichtung 85 auf. Die schlittenartige Führungsvorrichtung 85 ist im Bodenabschnitt 75 ausgebildet. Zu erkennen sind die seitlichen Schlittenbacken 86 und die Auflageflächen 87. Die schlittenartige Führungsvorrichtung 85 setzt sich somit aus zwei Schlittenbacken 86 und zwei Auflageflächen 87 zusammen. Es ist denkbar, dass die Auflageflächen 87 in Richtung der Frontplatte 71' nach oben gebogen ausgebildet sind.

Die dargestellte schlittenartige Führungsvorrichtung 85 kann auf eine schienenartige Führungsvorrichtung des Motorrollers 10 geschoben werden. Die schienenartige Führungsvorrichtung (nicht dargestellt) bildet somit das Gegenstück zur schlittenartigen Führungsvorrichtung 85. Sofern die Auflageflächen 87 der schlittenartigen Führungsvorrichtung 85 gebogen ausgebildet sind, sind die Auflageflächen der schienenartigen Führungsvorrichtung des Motorrollers 10 ebenfalls gebogen ausgebildet. Die frontplattenseitigen Flächen 88 des Bodenabschnitts 75 des Batteriegehäuses 21 dienen als Anschlagflächen. Die Flächen 88 regulieren den maximal möglichen Verschiebungsgrad des Batteriegehäuses 21 auf der schienenartigen Führungsvorrichtung des Motorrollers 10.

Die Batteriebaugruppe 70 weist des Weiteren einen kombinierten Strom-/Kommunikationsstecker 95 auf. Dieser kombinierte Strom-/Kommunikationsstecker 95 ist im Bodenabschnitt 75 des Batteriegehäuses 21 ausgebildet. In der dargestellten Ausführungsform befindet sich der kombinierte Strom-/Kommunikationsstecker 95 am frontplattenseitigen Ende bzw. an dem zur Frontplatte 71' weisenden Ende der schlittenartigen Führungsvorrichtung 85. Der kombinierte Strom-/Kommunikationsstecker 95 dient somit zum einen zur elektrischen Verbindung der Batteriebaugruppe 70 mit dem Motorroller 10. Zum anderen können Daten der Batteriebaugruppe 70 an den Motorroller 10 gesendet werden. Es ist möglich, dass Informationen bzw. Daten wie z.B. die Batterietemperatur und/oder der Ladezustand der Batterie 90 und/oder andere notwendige Daten hinsichtlich der Batterie 90 bzw. der Batteriebaugruppe 70 zur Anzeigeeinheit 100 gesendet werden.

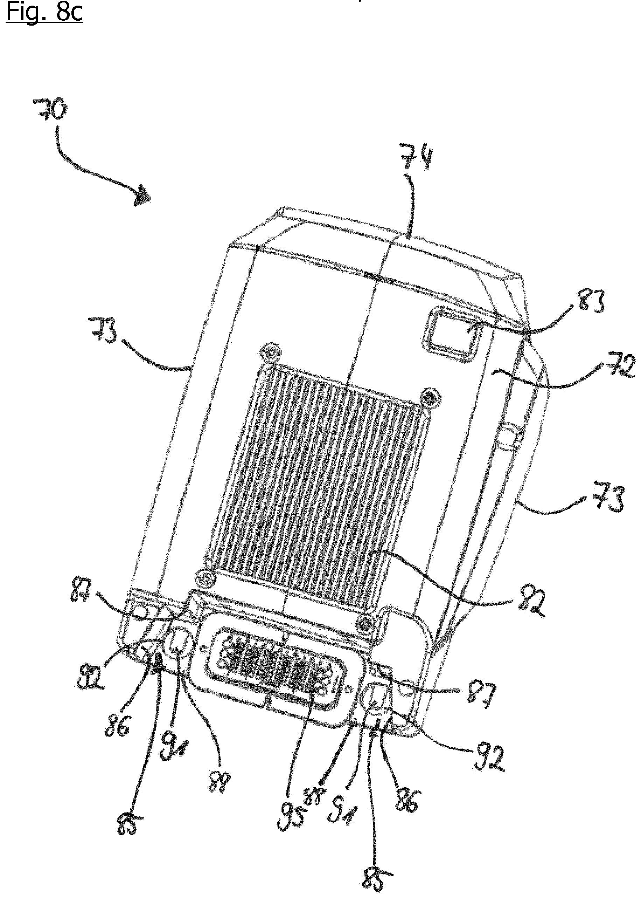

Sofern die Batteriebaugruppe 70 mit dem elektrischen Motorroller 10 verbunden ist und ausgewechselt bzw. aufgeladen werden soll, kann durch ein Betätigen des Betätigungselements 80 eine mechanische Verriegelung 91 (siehe Fig. 8c) gelöst werden. Zugleich wird der im Batteriegehäuse 21 ausgebildete Stromkreis unterbrochen. In der dargestellten Ausführungsform der Erfindung bilden zwei Verriegelungsbolzen die mechanische Verriegelung 91. Durch ein Hochziehen in Zugrichtung Z des Betätigungselements 80 werden auch die dargestellten Verriegelungsbolzen in Zugrichtung Z gezogen.

Zwei in den Aussparrungen 92 des Batteriegehäuses 21 (siehe hierzu Fig. 8c) befindliche Verriegelungsgegenstücke (nicht dargestellt) des Motorrollers 10 sind aufgrund des Hochziehens der Verriegelungsbolzen entriegelt. Nach diesem Hochziehen und Entriegeln der mechanischen Verriegelung 91 kann das Batteriegehäuse 21 mittels der schlittenartigen Führungsvorrichtung 85 auf der schienenartigen Führungsvorrichtung des Motorrollers 10 in Fahrtrichtung F verschoben bzw. geschoben werden. Das Batteriegehäuse 21 ist demnach in Fahrtrichtung F aus dem Halterahmen 56 lösbar.

Aufgrund des Betätigens bzw. Ziehens des Betätigungselements 80 wird des Weiteren ein im Inneren des Batteriegehäuses befindlicher Kontaktschalter betätigt, der den Stromkreis der Batteriebaugruppe 70 unterbricht. Nach dem vollständigen Entfernen des Batteriegehäuses 21 vom Motorroller 10 und dem Loslassen des Betätigungselements 80 kann der Kontaktschalter derart ausgebildet sein, dass der Stromkreis aufgrund des Loslassens des Betätigungselements 80 wieder geschlossen wird.

Aufgrund des Unterbrechens des Stromkreises ist die Strom-/Kommunikationsverbindung, die durch den Strom-/Kommunikationsstecker 95 der Batteriebaugruppe und einer Strom-/Kommunikationsbuchse des Motorrollers 10 gebildet wird, stromlos. Demnach fließt beim Verschieben des Batteriegehäuses 21 auf der schienenartigen Führungsvorrichtung und bei dem entsprechenden Loslösen des Strom-/Kommunikationssteckers 95 aus der Strom-/Kommunikationsbuchse kein Strom.

Beispielsweise weist die Batteriebaugruppe 70 einen Notaus-Knopf 99 auf, der z. B. auf der Frontplatte 71' ausgebildet ist.

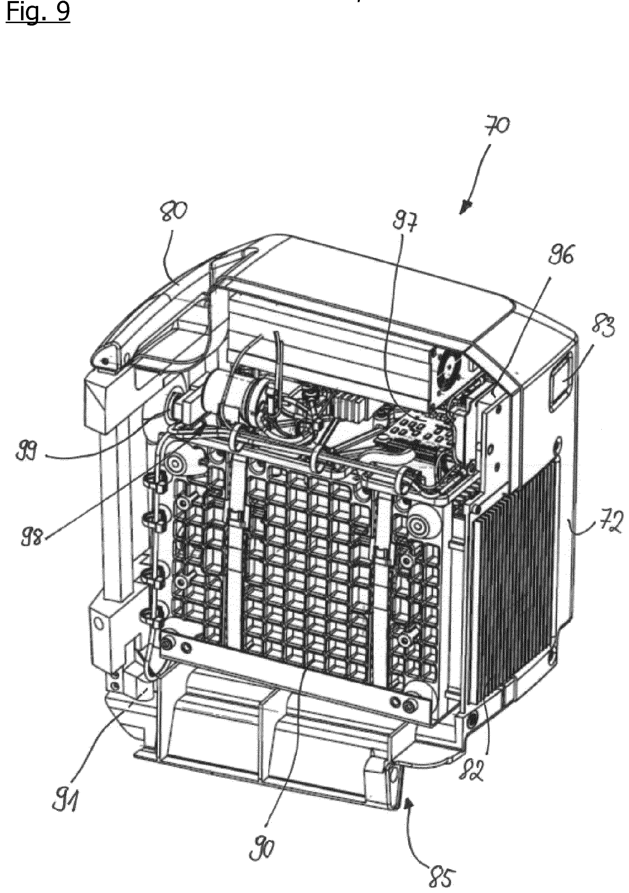

In der Fig. 9 werden in einer teiltransparenten Ansicht die im Batteriegehäuse 21 befindlichen Komponenten dargestellt. Die Batterie 90 ist als Akkus atz ausgebildet. Des Weiteren ist die Kühlrippenplatte 82 auf der Rückplatte 72' zu erkennen. Ebenfalls im Batteriegehäuse 21 befinden sich ein Ladegerät 96, eine Batterie-steuereinheit 97 sowie ein DC-DC-Konverter 98.

In der Fig. 10 ist ein Schnitt einer Sitzbaugruppe 70 bzw. einer Batteriebaugruppe 70 in einer perspektivischen Ansicht gezeigt. Die Sitzbaugruppe 70 weist einen Sattel 20 auf, der auf der Oberseite der Sitzbaugruppe 70 angeordnet ist und mit einem Rahmen 21 lösbar verbunden ist. Im dargestellten Ausführungsbeispiel umfasst der Rahmen 21 das Gehäuse der Sitzbaugruppe. Ferner weist die Sitzbaugruppe 70 eine Schublade 152 auf, die in einem Fach 150' innerhalb der Sitzbaugrupp 70 angeordnet ist. Die Schublade 152 ist in dem Fach 150' ausziehbar gelagert. Am vom Lenker wegzeigenden Ende der Schublade 152 ist eine Öffnung 153 vorgesehen, durch die das Verriegelungs-Betätigungselement (nicht dargestellt) läuft. Z.B. kann eine Schlaufe vorgesehen sein, die durch die Öffnung 153 läuft und mit der mechanischen Verriegelung 91 verbunden ist, sodass durch Ziehen an der Schlaufe, die mechanische Verriegelung 91 gelöst wird.

Die Schublade 152 ist im dargestellten Ausführungsbeispiel durch ein Schloss 154 in der geschlossenen Position gegen einen Auszug gesichert. Beim dem Schloss 154 kann es sich z.B. um ein Schloss 154 umfassend einen Schließzylinder mit einer Schließnase handeln, wobei die Schließnase in eine Nut der Schublade 152 eingreift, um die Schublade 152 gegen einen Auszug zu sichern. In einem weiteren Ausführungsbeispiel kann das Schloss 154 auch als Hebelschloss ausgebildet sein.

Durch den Auszug der Schublade 152 wird ein Sicherungselement (nicht dargestellt) betätigt. Das Sicherungselement wird durch den Auszug von einer Verankerungsposition in eine Freigabeposition überführt. Durch das Betätigen des Sicherungselements wird die Verbindung des Sattels 20 mit dem Rahmen 21 gelöst, sodass der Sattel 20 abnehmbar bzw. konfektionierbar ist. Nachdem ein neuer Sattel 20 auf den Rahmen 21 aufgelegt ist, wird durch das Schließen der Schublade 152 das Sicherungselement betätigt und eine sichere Verbindung des neuen Sattels 20 mit dem Rahmen 21 hergestellt.

In einem Ausführungsbeispiel wird das Sicherungselement mittels einer Nut oder einer am Rahmen befestigten Öse und mindestens einem Stift, der an der Schublade 152 angeordnet ist, umgesetzt. Wenn sich die Schublade 152 in der geschlossenen Position befindet, greift der Stift in die Öse oder in die Nut am Rahmen ein, sodass der Sattel 20 nicht angehoben werden kann. Durch den Auszug der Schublade 152 wird der Stift aus der Öse bzw. der Nut herausgezogen, sodass der Sattel 20 freigegen ist und ausgetauscht werden kann.

In einem weiteren Ausführungsbeispiel ist das Sicherungselement betätigbar, wenn die Schublade 152 ausgezogen ist. Z.B. kann ein Hebel innerhalb der Schublade 152 angeordnet sein, sodass der Fahrer des Motorrollers 10 den Sattel 20 durch manuelles Betätigen des Hebels lösen kann.

In einem Ausführungsbeispiel ist der Sattel 20 gegenüber dem Rahmen 21 durch eine Feder oder ein ähnlichen Element vorgespannt. Dadurch wird der Sattel 20 von dem Rahmen 21 weggedrückt, sobald der Sattel 20 nicht mit dem Rahmen 21 verbunden ist. Dadurch wird dem Fahrer eine visuelle und haptische Rückmeldung gegeben, dass der Sattel 20 abnehmbar ist, sodass ein versehentliches lösen des Sattels 20 vermieden wird.

In einem bevorzugten Ausführungsbeispiel ist der Sattel 20 mit dem Rahmen 21 verrastet, z.B. mittels eines Schnappverschlusses, und durch eine Feder vorgespannt. Wenn der Sattel 20 durch Betätigen des Sicherungselements freigegeben wird, so wird die Verrastung gelöst und der Sattel 20 ist für den Fahrer sichtbar freigegeben. Dadurch, dass eine Verrastung vorgesehen ist, kann durch Druck von oben, also von einer Richtung zumindest im Wesentlich orthogonal zur Sitzebene, der Sattel 20 mit dem Rahmen 21 erneut verrastet werden. Bei der beschriebenen Ausführungsform wird sichergestellt, dass der Sattel 20 immer mit dem Rahmen 21 verbunden ist, wenn ein Fahrer auf dem Sattel 20 sitzt. Dadurch wird die Sicherheit für den Fahrer erhöht.

Fig. 11 zeigt einen Motorroller 10, bei dem der Sattel 20 gelöst ist und bei dem die Schublade 152 durch das dargestellte Schloss 154 verschlossen ist. In dem dargestellten Ausführungsbeispiel wird kann Sattel 20 durch Auflegen auf den Deckelabschnitt 74 mit dem Rahmen 21 verrastet werden, auch wenn die Schublade 152 verschlossen ist.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Motorroller
- 11: hinterer Rahmenteil
- 12: Vorderrad
- 12': Hinterrad
- 20: Sattel
- 21: Batteriegehäuse
- 30: Lenkeinrichtung
- 56: Halterahmen
- 70: Batteriebaugruppe, Sitzbaugruppe
- 71: Frontabschnitt
- 71': Frontplatte
- 72: Rückabschnitt
- 72': Rückplatte
- 73: Seitenabschnitt
- 73': Seitenplatte
- 74: Deckelabschnitt
- 74': Deckel platte
- 75: Bodenabschnitt
- 76: Übergangsbereich
- 80: Betätigungselement
- 81: Eingriffsausnehmung
- 82: Kühlrippenplatte
- 83: Netzbuchse
- 85: schlittenartige Führungsvorrichtung
- 86: Schlittenbacke
- 87: Auflagefläche
- 88: Anschlagfläche
- 89: Greifabschnitt
- 90: Batterie
- 91: mechanische Verriegelung
- 92: Aussparung Batteriegehäuse
- 95: kombinierter Strom-/Kommunikationsstecker
- 96: Ladegerät
- 97: Batterie-Steuereinheit
- 98: DC/DC-Konverter
- 99: Notaus-Knopf
- 100: Anzeigeeinheit
- 130: Rolle
- 135: Verlängerungsabschnitt
- 136: Führungsschiene
- 140: Verriegelungsplatte
- 141: Kante Verriegelungsplatte
- 150, 150': Fach
- 151: Deckel
- 152: Schublade
- 153: Schubladenöffnung
- 154: Schloss
- 160: Verriegelungsausnehmung
- 180: Querschnittsprofil
- 185: Lautsprecher
- 190: Vertiefung
- 210: Führungsvorrichtung Motorroller
- 220: Zentrierungshilfe
- 221: Kante Zentrierungshilfe
- 230: Verriegelungsausnehmung
- 300: kombinierte Strom-/Kommunikationsbuchse
- 310: Verriegelungsausformung
- 315: Ausnehmung

- F: Fahrtrichtung
- Z: Zugrichtung

## Patentansprüche

1. Sitzbaugruppe (70), insbesondere Batteriebaugruppe (70), für ein Motorfahrzeug (10), umfassend:
- einen Rahmen (21), insbesondere umfassend ein Batteriegehäuse (21);
- einen Sattel (20), der auf dem Rahmen (21) angeordnet und mit dem Rahmen (21) über ein Sicherungselement lösbar verbunden ist;
- ein Fach (150, 150') mit einer Schublade (152), die innerhalb des Fachs (150, 150') ausziehbar angeordnet ist,
wobei:
- das Sicherungselement dazu ausgebildet ist:
∘ den Sattel (20) in einer Freigabeposition freizugeben; und
∘ den Sattel (20) in einer Verankerungsposition zu sichern,
**dadurch gekennzeichnet, dass**
das Sicherungselement derart angeordnet und ausgebildet ist, dass das Sicherungselement beim Ausziehen der Schublade (152) betätigt und/oder freigegeben wird.

2. Sitzbaugruppe (70) nach Anspruch 1,
**dadurch gekennzeichnet, dass**
das Sicherungselement einen Stift und eine Nut umfasst, wobei die Nut fest mit dem Sattel (20) und der Stift fest mit der Schublade (152) verbunden ist, wobei der Stift in einer eingeschobenen Position der Schublade (152) derart in die Nut eingreift, dass der Sattel (20) gegen eine Entnahme gesichert ist.

3. Sitzbaugruppe (70) nach einem der vorhergehenden Ansprüche,
**dadurch gekennzeichnet, dass**
die Sitzbaugruppe (70) ein Federelement aufweist, wobei das Federelement so angeordnet und ausgebildet ist, dass der Sattel (20) gegenüber dem Rahmen (21) mittels des Federelements vorgespannt ist, wenn der Sattel (20) gesichert ist.

4. Sitzbaugruppe (70) nach einem der vorhergehenden Ansprüche,
**dadurch gekennzeichnet, dass**
der Sattel (20) eine Ausnehmung und die Schublade (152) einen Schließzylinder (154) mit einer Schließnase aufweist, wobei die Schließnase dazu ausgebildet ist, in einer Sperrstellung des Schließzylinders (154) in die Ausnehmung einzugreifen, wenn sich die Schublade (152) in einer/der eingeschobenen Position befindet.

5. Batteriebaugruppe (70) für ein elektrisch antreibbares Motorfahrzeug, insbesondere für ein Motorrad, vorzugsweise für einen Motorroller (10), umfassend:
- mindestens eine Batterie (90);
- mindestens eine lösbare mechanische Verriegelung (91) zur Verbindung der Batteriebaugruppe (70) mit dem Motorfahrzeug;
- eine in einem Fach (150, 150') angeordnete Schublade (152), wobei die Schublade (152) vorzugsweise in dem Fach (150, 150') verriegelbar und/oder verschließbar ist;
wobei
die mechanische Verriegelung (91) durch ein in der Schublade (152) angeordnetes Verriegelungs-Betätigungselement betätigbar ist.

6. Batteriebaugruppe (70) nach Anspruch 5,
**dadurch gekennzeichnet, dass**
das Batteriegehäuse (21) einen Frontabschnitt (71), einen Rückabschnitt (72), zwei die Front- und Rückabschnitte verbindende Seitenabschnitte (73), einen Deckelabschnitt (74) und einen Bodenabschnitt (75) umfasst, wobei das Batteriegehäuse (21) eine Führungsvorrichtung (85) aufweist, die auf eine Führungsvorrichtung (210) des Motorfahrzeugs geschoben oder schiebbar ist.

7. Batteriebaugruppe (70) nach Anspruch 6,
**dadurch gekennzeichnet, dass**
die Führungsvorrichtung als eine schlittenartige Führungsvorrichtung (85) ausgebildet ist und die schlittenartige Führungsvorrichtung (85) im Bodenabschnitt (75) ausgebildet ist.

8. Batteriebaugruppe (70) nach einem der Ansprüche 5 bis 7,
**gekennzeichnet durch**
eine mechanische Verriegelung (91), insbesondere einen Verriegelungshaken, der/die vorzugsweise im Bodenabschnitt (75) des Batteriegehäuses (21) ausgebildet ist.

9. Batteriebaugruppe (70) nach einem der Ansprüche 5 bis 8,
**dadurch gekennzeichnet, dass**
das Verriegelungs-Betätigungselement derart angeordnet und ausgebildet ist, dass das Verriegelungs-Betätigungselement in einer ausgezogenen Position der Schublade zugänglich bzw. betätigbar ist.

10. Batteriebaugruppe (70) nach einem der Ansprüche 5 bis 9,
**dadurch gekennzeichnet, dass**
auf dem Batteriegehäuse (21), insbesondere deckelabschnittsseitig, ein Sattel (20) zur Bereitstellung einer Sitzbaugruppe, insbesondere gemäß nach einem der Ansprüche 1-4, ausgebildet ist.

11. Elektrisch antreibbares Motorfahrzeug, umfassend mindestens eine Batteriebaugruppe nach einem der Ansprüche 5 bis 10 und/oder eine Sitzbaugruppe nach einem der Ansprüche 1 bis 4.

12. Elektrisch antreibbares Motorfahrzeug nach Anspruch 11,
**dadurch gekennzeichnet, dass**
die Batteriebaugruppe (70) bzw. die Sitzbaugruppe (70) an einem hinteren Rahmenteil (11) des Motorfahrzeugs (10) mittels einer/der lösbaren mechanischen Verriegelung (91) befestigt ist.

13. Elektrisch antreibbares Motorfahrzeug nach Anspruch 11 oder 12,
**gekennzeichnet durch**
eine, insbesondere schienenartig ausgebildete, Führungsvorrichtung (210), wobei ein/das Batteriegehäuse (21) nach Lösen einer/der mechanischen Verriegelung (91) der Batteriebaugruppe (70) mit Hilfe einer/der, Führungsvorrichtung (85) der Batteriebaugruppe (70) von der Führungsvorrichtung (210) des Motorfahrzeugs, entgegen der Fahrtrichtung (F) schiebbar ist.

14. Elektrisch antreibbares Motorfahrzeug nach einem der Ansprüche Anspruch 12 oder 13,
**gekennzeichnet durch**
ein mit der mechanischen Verriegelung (91) zusammenwirkend ausgebildetes Verriegelungsgegenstück, insbesondere einen Verriegelungsbügel.

15. Verfahren zur Konfektionierung eines Motorfahrzeugs mittels einer Sitzbaugruppe nach einem der Ansprüche 1 bis 4 und/oder eines Sattels einer Batteriebaugruppe nach einem der Ansprüche 5 bis 10, wobei ein Sicherungselement einen Sattel in einer Sicherungsposition mit einem Rahmen, insbesondere einem Batteriegehäuse, lösbar verbindet, umfassend:
- Überführen des Sicherungselements von einer Verankerungsposition in eine Freigabeposition zur Freigabe des Sattels (20);
- Lösen des Sattels (20);
- Einsetzen eines zweiten, insbesondere unterschiedlichen, Sattels, insbesondere eines Sattels mit unterschiedliche Sitzhöhe;
- Überführen des Sicherungselements von der Freigabeposition in die Verankerungsposition zum Sichern des Sattels.

## Claims

1. A seat assembly (70), in particular a battery assembly (70), for a motor vehicle (10), comprising:
- a frame (21), in particular comprising a battery housing (21),
- a saddle (20) which is disposed on the frame (21) and detachably connected to the frame (21) via a securing element;
- a compartment (150, 150') having a drawer (152) disposed within the compartment (150, 150') to be able to be drawn out,
wherein
- the securing element is configured to:
∘ release the saddle (20) in a release position; and
∘ to secure the saddle (20) in an anchoring position,
**characterized in that**
the securing element is disposed and formed such that the securing element is actuated and/or released when the drawer (152) is drawn out.

2. The seat assembly (70) according to claim 1,
**characterized in that**
the securing element comprises a pin and a groove, wherein the groove is fixedly connected to the saddle (20) and the pin is fixedly connected to the drawer (152), wherein the pin, in a slid-in position of the drawer (152), engages into the groove such that the saddle (20) is secured against removal.

3. The seat assembly (70) according to any one of the preceding claims,
**characterized in that**
the seat assembly (70) includes a spring element, wherein the spring element is disposed and formed such the saddle (20) is pretensioned with respect to the frame (21) by means of the spring element when the saddle (20) is secured.

4. The seat assembly (70) according to any one of the preceding claims,
**characterized in that**
the saddle (20) includes a recess and the drawer (152) includes a locking cylinder (154) having a locking lug, wherein the locking lug, in a locking position of the locking cylinder (154), is configured to engage into the recess when the drawer (152) is in a/the slid-in position.

5. A battery assembly (70) for an electrically drivable motor vehicle, in particular for a motor bike, preferably for a motor scooter (10), comprising:
- at least one battery (90);
- at least one detachable mechanical lock (91) for connecting the battery assembly (70) to the motor vehicle;
- a drawer (152) disposed within a compartment (150, 150'), wherein the drawer (152) preferably is lockable and/or closable within the compartment (150, 150');
wherein
the mechanical lock (91) can be actuated by a lock actuating element disposed within the drawer (152).

6. The battery assembly (70) according to claim 5,
**characterized in that**
the battery housing (21) comprises a front portion (71), a rear portion (72), two side portions (73) connecting the front and rear portions, a cover portion (74) and a bottom portion (75), wherein the battery housing (21) includes a guiding device (85) slid upon or slidable upon a guiding device (210) of the motor vehicle.

7. The battery assembly (70) according to claim 6,
**characterized in that**
the guiding device is formed as a slide-like guiding device (85), and the slide-like guiding device (85) is formed within the bottom portion (75).

8. The battery assembly (70) according to any one of claims 5 to 7,
**characterized by**
a mechanical lock (91), in particular a locking hook, preferably formed within the bottom portion (75) of the battery housing (21).

9. The battery assembly (70) according to any one of claims 5 to 8,
**characterized in that**
the lock actuating element is disposed and formed such that the lock actuating element is accessible or actuatable in a drawn-out position of the drawer.

10. The battery assembly (70) according to any one of claims 5 to 9,
**characterized in that**
on top of the battery housing (21), in particular on the cover portion side, a saddle (20) is formed for providing a seat assembly, in particular according to any one of claims 1 to 4.

11. An electrically drivable motor vehicle, comprising at least one battery assembly according to any one of claims 5 to 10 and/or a seat assembly according to any one of claims 1 to 4.

12. The electrically drivable motor vehicle according to claim 11,
**characterized in that**
the battery assembly (70) or the seat assembly (70) is attached at a rear frame part (11) of the motor vehicle (10) by means of a/the detachable mechanical lock (91).

13. The electrically drivable motor vehicle according to claim 11 or 12,
**characterized by**
a guiding device (210) of in particular rail-like formation, wherein a/the battery housing (21), after detaching a/the mechanical lock (91) of the battery assembly (70) is slidable by means of a/the guiding device (85) of the battery assembly (70) against the travel direction (F) by the guiding device (210) of the motor vehicle.

14. The electrically drivable motor vehicle according to any one of claims 12 or 13,
**characterized by**
a locking counterpart, in particular a locking bracket formed to be cooperating with the mechanical lock (91).

15. A method for confectioning a motor vehicle by means of a seat assembly according to any one of claims 1 to 4 and/or a saddle of a battery assembly according to any one of claims 5 to 10, wherein, in a securing position, a securing element detachably connects a saddle to a frame, in particular to a battery housing, comprising:
- transferring the securing element form an anchoring position into a release position for releasing the saddle (20),
- detaching the saddle (20);
- inserting a second, in particular different saddle, in particular a saddle having a different seat height;
- transferring the securing element from the release position into the anchoring position for securing the saddle.

## Revendications

1. Ensemble de siège (70), en particulier ensemble de batterie (70), pour un véhicule à moteur (10), comprenant :
- un cadre (21), en particulier comprenant un boîtier de batterie (21) ;
- une selle (20) qui est disposée sur le cadre (21) et qui est reliée au cadre (21) de manière détachable via un élément d'arrêt ;
- un compartiment (150, 150') pourvu d'un tiroir (152) qui est disposé de manière extractible à l'intérieur du compartiment (150, 150'),
sachant que :
- l'élément d'arrêt est constitué pour :
∘ libérer la selle (20) dans une position de libération ; et
∘ arrêter la selle (20) dans une position d'ancrage,
**caractérisé en ce que**
l'élément d'arrêt est disposé et constitué de telle manière que l'élément d'arrêt soit actionné et/ou libéré lors de l'extraction du tiroir (152).

2. Ensemble de siège (70) selon la revendication 1,
**caractérisé en ce que**
l'élément d'arrêt comprend un goujon et une rainure, sachant que la rainure est fermement reliée à la selle (20) et le goujon est fermement relié au tiroir (152),
sachant que le goujon, dans une position insérée du tiroir (152), se met en prise dans la rainure de telle manière que la selle (20) soit arrêtée contre un enlèvement.

3. Ensemble de siège (70) selon l'une des revendications précédentes,
**caractérisé en ce que**
l'ensemble de siège (70) présente un élément ressort, sachant que l'élément ressort est disposé et constitué de telle manière que la selle (20) soit précontrainte par rapport au cadre (21) moyennant l'élément ressort lorsque la selle (20) est arrêtée.

4. Ensemble de siège (70) selon l'une des revendications précédentes,
**caractérisé en ce que**
la selle (20) présente un évidement et le tiroir (152) présente un cylindre de fermeture (154) pourvu d'un nez de fermeture, sachant que le nez de fermeture est constitué pour se mettre en prise dans l'évidement dans une position de blocage du cylindre de fermeture (154) lorsque le tiroir (152) se trouve dans une/la position insérée.

5. Ensemble de batterie (70) pour un véhicule à moteur entraînable électriquement, en particulier pour une moto, de préférence pour un scooter (10), comprenant :
- au moins une batterie (90) ;
- au moins un verrouillage mécanique (91) détachable pour la liaison de l'ensemble de batterie (70) au véhicule à moteur ;
- un tiroir (152) disposé dans un compartiment (150, 150'), sachant que le tiroir (152) est de préférence verrouillable et/ou fermable dans le compartiment (150, 150') ;
sachant que
le verrouillage mécanique (91) est actionnable par un élément d'actionnement de verrouillage disposé dans le tiroir (152).

6. Ensemble de batterie (70) selon la revendication 5,
**caractérisé en ce que**
le boîtier de batterie (21) comprend une section avant (71), une section arrière (72), deux sections latérales (73) reliant les sections avant et arrière, une section de couvercle (74) et une section de fond (75), sachant que le boîtier de batterie (21) présente un dispositif de guidage (85) qui est poussé ou apte à être poussé sur un dispositif de guidage (210) du véhicule à moteur.

7. Ensemble de batterie (70) selon la revendication 6,
**caractérisé en ce que**
le dispositif de guidage est constitué comme dispositif de guidage (85) de type coulisseau et le dispositif de guidage (85) de type coulisseau est constitué dans la section de fond (75).

8. Ensemble de batterie (70) selon l'une des revendications 5 à 7,
**caractérisé par**
un verrouillage mécanique (91), en particulier un crochet de verrouillage, qui est constitué de préférence dans la section de fond (75) du boîtier de batterie (21).

9. Ensemble de batterie (70) selon l'une des revendications 5 à 8,
**caractérisé en ce que**
l'élément d'actionnement de verrouillage est disposé et constitué de telle manière que l'élément d'actionnement de verrouillage soit accessible ou actionnable dans une position extraite du tiroir.

10. Ensemble de batterie (70) selon l'une des revendications 5 à 9,
**caractérisé en ce que**
sur le boîtier de batterie (21), en particulier côté section de couvercle, une selle (20) est constituée pour fournir un ensemble de siège, en particulier selon l'une des revendications 1 à 4.

11. Véhicule à moteur entraînable électriquement, comprenant au moins un ensemble de batterie selon l'une des revendications 5 à 10 et/ou un ensemble de siège selon l'une des revendications 1 à 4.

12. Véhicule à moteur entraînable électriquement selon la revendication 11,
**caractérisé en ce que**
l'ensemble de batterie (70) ou l'ensemble de siège (70) est fixé à une partie de cadre arrière (11) du véhicule à moteur (10) moyennant un/le verrouillage mécanique (91) détachable.

13. Véhicule à moteur entraînable électriquement selon la revendication 11 ou 12,
**caractérisé par**
un dispositif de guidage (210), en particulier constitué en forme de rail, sachant qu'un/le boîtier de batterie (21) peut être poussé du dispositif de guidage (210) du véhicule à moteur, contre le sens de la marche (F), après le détachement d'un/du verrouillage mécanique (91) de l'ensemble de batterie (70) à l'aide d'un/du dispositif de guidage (85) de l'ensemble de batterie (70).

14. Véhicule à moteur entraînable électriquement selon l'une des revendications 12 ou 13,
**caractérisé par**
une contrepartie de verrouillage constituée de manière à interagir avec le verrouillage mécanique (91), en particulier un étrier de verrouillage.

15. Procédé de confection d'un véhicule à moteur moyennant un ensemble de siège selon l'une des revendications 1 à 4 et/ou d'une selle d'un ensemble de batterie selon l'une des revendications 5 à 10, sachant qu'un élément d'arrêt relie de manière détachable une selle à un cadre, en particulier à un boîtier de batterie, dans une position d'arrêt, comprenant :
- le transfert de l'élément d'arrêt d'une position d'ancrage à une position de libération pour libérer la selle (20) ;
- le détachement de la selle (20) ;
- la mise en place d'une deuxième selle, en particulier différente, en particulier d'une selle ayant une hauteur de siège différente ;
- le transfert de l'élément d'arrêt de la position de libération à la position d'ancrage pour arrêter la selle.
